# EUROPÄISCHE PATENTSCHRIFT

(11) **EP 4 361 461 B1**
(45) Veröffentlichungstag und Bekanntmachung des Hinweises auf die Patenterteilung: **26.11.2025**
(21) Anmeldenummer: 23207061.5
(22) Anmeldetag: 31.10.2023
(51) Int. Cl.: F16B 25/00, F16B 35/04

(54) **ÜBERWALLUNGSELEMENT UND VORRICHTUNG ZUM VERANKERN VON PLATTFORMEN IN BÄUMEN**
A BOOM ELEMENT AND A DEVICE FOR ANCHORING PLATFORMS IN TREES
ELÉMENT DE PAROI SUPÉRIEURE ET DISPOSITIF D'ANCRAGE DE PLATE-FORMES DANS DES ARBRES

(30) Priorität: 31.10.2022 DE 102022211547; 17.11.2022 DE 102022212271
(43) Veröffentlichungstag der Anmeldung: 01.05.2024
(73) Patentinhaber: Wackenhut, Helmut, 73614 Schorndorf-Schlichten (DE)
(72) Erfinder: Wackenhut, Helmut, 73614 Schorndorf-Schlichten (DE)
(74) Vertreter: Rau, Schneck & Hübner Patentanwälte Rechtsanwälte PartGmbB

(56) Entgegenhaltungen:
- FR-A1- 2 974 599
- FR-A1- 3 073 262
- GB-A- 808 165
- WAHLL�NDER VITUS: "German Treehouse Screw 'GTS'", 26 September 2022 (2022-09-26), XP093141446, Retrieved from the Internet <URL:https://web.archive.org/web/20220926071750/https://thetreehouse.shop/baumhaus-befestigen/baumhaus-schraube-german-treehouse-screw-gts/> [retrieved on 20240314]

## Beschreibung

Auf den Inhalt der deutschen Patentanmeldungen DE 10 2022 211 547.3 und DE 10 2022 212 271.2 wird hingewiesen.

Die Erfindung betrifft ein Überwallungselement für eine Vorrichtung zum Verankern von Plattformen, Seilen oder anderen konstruktiven Bauelementen in Bäumen. Die Erfindung betrifft außerdem eine Vorrichtung zum Verankern von Plattformen, Seilen oder anderen konstruktiven Bauelementen in Bäumen mit einem entsprechenden Überwallungselement. Weiter betrifft die Erfindung ein Verfahren zum Verankern einer Plattform, eines Seils oder anderen konstruktiven Bauelementen in Bäumen und ein Verfahren zur Herstellung eines Überwallungselements.

Zum Verankern von Plattformen, insbesondere für Baumhäuser, in Bäumen werden beispielsweise Baumhausschrauben verwendet. Das Einsetzen derartiger Schrauben in Bäume kann zu einer Beschädigung der Bäume führen. Verringert man den Durchmesser der Schrauben, kann dies dazu führen, dass sie der auf sie einwirkenden Last nicht standhalten.

Aus der DE 10 2017 117 246 A1 und der DE 20 2018 103 776 U1 sind Vorrichtungen und Verfahren zur Erzeugung eines dauerhaften Befestigungspunktes an einem Baum bekannt. Aus der EP 3 141 768 A1 ist eine Holzschraube bekannt. Aus der FR 2 974 599 A1 ist eine Baumschraube bekannt. Aus der DE 10 2021 204 966 A1 ist eine Verankerungsvorrichtung bekannt.

Es besteht Bedarf, eine Vorrichtung zum Verankern von Plattformen oder anderen Bauelementen in Bäumen zu verbessern.

Diese Aufgabe wird durch die Merkmale des Anspruchs 1 gelöst.

Gemäß einem Aspekt der Erfindung weist ein Überwallungselement einen sich parallel zu einer Längsachse erstreckenden Überwallungskörper mit einer zumindest abschnittsweise profilierten Oberfläche auf.

Die Oberfläche des Überwallungskörpers kann insbesondere geriffelt, gewellt oder gezackt ausgebildet sein.

Das Oberflächenprofil kann insbesondere geriffelt, gewellt oder gezackt ausgebildet sein.

Es kann sich insbesondere um ein symmetrisches Profil handeln.

Es kann sich insbesondere auch um ein asymmetrisches Profil handeln. Abschnittsweise Kombinationen sind ebenfalls möglich.

Hierbei bezieht sich die Angabe symmetrisch/asymmetrisch auf die sich Form einer einzelnen Vertiefung/Verengung, insbesondere bei Betrachtung in einem Längsschnitt durch die Längsachse.

Die Angabe symmetrisch/asymmetrisch kann sich insbesondere auf die Form einer sich wiederholenden Vertiefung/Verengung, insbesondere bei Betrachtung in einem Längsschnitt durch die Längsachse, beziehen.

Durch die Profilierung der Oberfläche lässt sich die Verankerung einer Vorrichtung mit einem entsprechenden Überwallungselement in einem Baum verbessern. Insbesondere kann die mit der Zeit zunehmende Überwallung des Überwallungselements zu einer verbesserten Anordnung, insbesondere zu einer erhöhten Ausreiß-Resistenz, führen.

Bei der profilierten Oberfläche handelt es sich insbesondere um eine Umfangsfläche, insbesondere um die Mantelfläche des Überwallungskörpers.

Als profiliert wird insbesondere eine Abfolge von Vertiefungen in der Oberfläche des Überwallungskörpers, insbesondere Vertiefungen in Radialrichtung, bezeichnet. Die Vertiefungen können periodisch, regelmäßig oder unregelmäßig auf dem Überwallungskörper angeordnet sein. Sie können insbesondere in Richtung parallel zur Längsachse periodisch angeordnet sein. Die Vertiefungen bilden Verengungen des Durchmessers des Überwallungskörpers. Sie werden auch als Verengungen bezeichnet.

Das Oberflächenprofil kann insbesondere an eine bestimmte Baumart und/oder an das radiale Wachstum eines bestimmten Baumes angepasst sein. Es ist insbesondere möglich, die Periode der Vertiefungen entsprechend einem mittleren Abstand von Jahresringen des Baumes zu wählen. Letzterer kann beispielsweise durch Kernbohrungen an einem bestimmten Baum oder an einem vergleichbaren Baum, insbesondere einem Baum derselben Art, welcher in der Nachbarschaft eines bestimmten Baumes wächst, ermittelt werden.

Gemäß einem Aspekt kann der Überwallungskörper im Querschnitt zumindest abschnittsweise ein Sägezahnprofil, ein Fräs- oder Fräsungsprofil, ein Prägeprofil oder ein Walzprofil aufweisen.

Ein Fräsprofil bezeichnet hierbei ein Profil, welches mittels eines Fräsverfahrens gestellt werden kann. Es kann sich insbesondere um ein Rundfräsprofil handeln.

Ein Prägeprofil bezeichnet hierbei insbesondere ein Profil, welches mittels eines Prägeverfahrens hergestellt werden kann. Es kann sich insbesondere um ein Rändelprofil handeln, welches mittels eines Rändel-Verfahrens hergestellt werden kann.

Ein Walzprofil bezeichnet ein Profil, welches mit des mittels eines Walz-Verfahrens hergestellt werden kann.

Gemäß einem Aspekt kann das Oberflächenprofil des Überwallungskörpers mindestens drei, insbesondere mindestens fünf, insbesondere mindestens sieben Verengungen aufweisen.

Eine geringere Anzahl der Verengungen führt zu geringeren Herstellkosten. Eine größere Anzahl von Verengungen kann zu einer besonders langen Nutzung des Überwallungselements führen. Diesbezüglich kann vorgesehen sein, das über Überwallungselement, bevor es vollständig überwallt ist, durch weitere Überwallungselemente zu ergänzen.

Die Verengungen sind insbesondere in Längsrichtung beanstandet. Sie können regelmäßig, insbesondere periodisch, oder unregelmäßig angeordnet sein.

Der Abstand der Verengungen oder Vertiefungen in Längsrichtung kann vorzugsweise an das zu erwartende Dickenwachstum des Baums angepasst sein. Der Abstand kann insbesondere im Bereich von 1 mm bis 20 mm, insbesondere im Bereich von 3 mm bis 10 mm liegen.

Der Abstand der Verengungen bzw. Vertiefungen kann vorzugsweise an bestimmte Baumart(en) angepasst sein. Dies kann zu einer besonders guten Einbindung des Überwallungskörpers in den Baum führen.

Bei der Längsachse des Überwallungskörpers kann es sich um dessen Symmetrieachse handeln.

Die Verengungen oder Vertiefungen können eine Profiltiefe von mindestens 2 mm, insbesondere mindestens 4 mm, insbesondere mindestens 6 mm aufweisen.

Unter Profiltiefe sei insbesondere der Abstand in einem der Längsachse nächstliegenden Punkt auf der Oberfläche des Überwallungskörpers zur Einhüllenden des Überwallungskörpers in Radialrichtung, d. h. senkrecht zur Längsachse, verstanden.

Die Profiltiefe kann insbesondere mindestens 3 %, insbesondere mindestens 5 %, insbesondere mindestens 10 % des Durchmessers des Überwallungskörpers betragen.

Eine derartige Ausbildung des Profils kann zu einem besonders guten Einwachsen des Überwallungskörpers in den Baum und damit zu einem besonders zuverlässigen Sitz der Verankerung führen.

Das Verhältnis von Profiltiefe zu Periode kann insbesondere höchstens 2, insbesondere höchstens 1, insbesondere höchstens 0,7, insbesondere höchstens 0,5 betragen. Auch hierdurch kann das Einwachsen des Überwallungskörpers verbessert werden.

Gemäß einem Aspekt kann der Überwallungskörper eine Mehrzahl konisch zulaufender Bereiche aufweisen.

Hierdurch kann der Sitz des Überwallungskörpers im Baum verbessert werden.

Gemäß einem Aspekt kann der Überwallungskörper zumindest abschnittsweise, insbesondere vollständig, eine zylinderförmige oder eine konische Einhüllende aufweisen.

Unter zylinderförmig sei hier mathematisch zylinderförmig verstanden. Dies wird auch als allgemein zylinderförmig bezeichnet.

Die Einhüllende kann insbesondere kreiszylinderförmig oder prismenförmig sein.

Der Überwallungskörper kann insbesondere einen polygonalen, insbesondere einen dreieckigen, viereckigen oder sechseckigen Querschnitt aufweisen. Hierbei kann es sich insbesondere um regelmäßige Polygone handeln. Der Überwallungskörper kann auch einen kreisförmigen Querschnitt aufweisen.

Am Überwallungskörper kann insbesondere endseitig ein Abschnitt mit mindestens zwei parallelen Flächen vorgesehen sein. Diese können zum Greifen, insbesondere zum Auf- oder Einschrauben des Überwallungselements und/oder der Vorrichtung zum Verankern dienen.

Erfindungsgemäß ist der Überwallungskörper kantenfrei ausgebildet. Hierunter sei verstanden, dass sämtliche Kanten des Überwallungskörpers abgerundet ausgebildet sind. Sie können einen minimalen Krümmungsradius von mindestens 0,5 mm, insbesondere mindestens 1 mm, insbesondere mindestens 2 mm aufweisen.

Dies führt zu einer besonders schonenden Anordnung des Überwallungskörpers im Baum, insbesondere nach Überwallung des Überwallungskörpers.

Gemäß einem Aspekt kann der Überwallungskörper an einem ersten Ende eine Ausnehmung, insbesondere eine konisch ausgebildete Ausnehmung, aufweisen. Beim ersten Ende kann es sich insbesondere um das bei Verwendung des Überwallungskörpers dem Baum zugewandte Ende handeln.

Die konische Ausnehmung dient insbesondere zur Aufnahme eines Kraftübertragungselements.

Gemäß einem Aspekt kann der Überwallungskörper ein sich von einem zweiten Ende axial erstreckendes Innengewinde aufweisen.

Das zweite Ende ist insbesondere dem ersten Ende entgegengesetzt. Das zweite Ende ist insbesondere bei Verwendung des Überwallungselements auf der dem Baum abgewandten Seite des Überwallungskörpers angeordnet.

Bei dem Innengewinde kann es sich insbesondere um ein Normgewinde handeln.

Gemäß einem weiteren Aspekt kann das Überwallungselement einteilig mit einem Bolzen ausgebildet sein.

Eine weitere Aufgabe der Erfindung besteht darin, eine Vorrichtung zum Verankern von Plattformen, Seilen oder anderen konstruktiven Bauelementen in Bäumen zu verbessern.

Diese Aufgabe wird durch eine Vorrichtung mit einem Bolzen mit einem Verankerungsabschnitt und einem Überwallungselement gemäß der vorhergehenden Beschreibung gelöst.

Das Überwallungselement kann einteilig mit dem Bolzen ausgebildet sein. Es kann auch als separates Bauelement, welches mit dem Bolzen verbunden wird, ausgebildet sein.

Das Überwallungselement kann beispielsweise auf den Bolzen aufgeschraubt werden.

Weitere Details und Vorteile der Verankerungsvorrichtung werden nachfolgend noch näher beschrieben.

Eine weitere Aufgabe der Erfindung besteht darin, ein Verfahren zum Verankern einer Plattform, eines Seils oder anderer konstruktiver Bauelemente in einem Baum zu verbessern.

Diese Aufgabe wird durch ein Verfahren gemäß Anspruch 12, mit folgenden Schritten gelöst:
- Bereitstellen einer Verankerungsvorrichtung gemäß der vorhergehenden Beschreibung,
- Einbringen einer Bohrung, insbesondere einer Stufenbohrung, in einen Baum,
- Einschrauben des Verankerungsabschnitts des Bolzens in die Bohrung,
- wobei das Überwallungselement an einer definierten Position außerhalb des Kambiums zu liegen kommt.

Bei einer derartigen Anbringung der Verankerungsvorrichtung wird das Kambium des Baums geschont. Hierdurch wird die Überwallung des Überwallungselements unterstützt, dies führt zu einer besonders zuverlässigen Anordnung der Verankerungsvorrichtung im Baum.

Gemäß einem Aspekt kann das Überwallungselement in Abhängigkeit von der Baumart und/oder dem zu erwartenden jährlichen Dickenwachstum des Baums ausgewählt werden.

Das Überwallungselement, insbesondere das Oberflächenprofil desselben, kann insbesondere derart an die Baumart und/oder das zu erwartende jährliche Dickenwachstum des Baums ausgewählt werden, dass der Abstand benachbarter Vertiefungen, insbesondere deren Periode, dem mittleren Abstand der Jahresringe entspricht.

Gemäß einem weiteren Aspekt kann zur Auswahl des Überwallungselements zunächst eine Kernbohrung im Baum oder einem vergleichbaren Baum vorgenommen werden, aus welcher ein mittlerer Abstand von Jahresringen ermittelbar ist.

Die Kernbohrung kann insbesondere im selben Baum, in welchem die Verankerungsvorrichtung angebracht werden soll, vorgenommen werden. Sie kann auch in einem vergleichbaren Baum, insbesondere in einem Baum derselben Art aus der näheren Umgebung, insbesondere in einem Abstand von weniger als 500 m, insbesondere höchstens 300 m, insbesondere höchstens 100 m, insbesondere höchstens 50 m zu dem Baum, in welchen die Verankerungsvorrichtung eingebracht werden soll, vorgenommen werden.

Eine weitere Aufgabe der Erfindung besteht darin, ein Verfahren zur Herstellung eines Überwallungselements zu verbessern.

Diese Aufgabe wird durch ein Verfahren gemäß Anspruch 15, mit folgenden Schritten gelöst:
- Vorgabe eines mittleren jährlichen Dickenwachstums,
- Bereitstellen eines Überwallungskörpers, insbesondere eines unprofilierten Überwallungskörpers,
- Einbringen eines Oberflächenprofils in den Überwallungskörper,
- wobei das Oberflächenprofil eine Periodizität hat, welche um höchstens 50 %, insbesondere höchstens 30 %, insbesondere höchstens 10 % vom vorgegebenen mittleren jährlichen Dickenwachstum abweicht.

Die Aufgabe wird außerdem durch ein Verfahren mit folgenden Schritten gelöst:
- Vorgabe eines mittleren jährlichen Dickenwachstums,
- Bereitstellen eines Überwallungskörpers, insbesondere eines unprofilierten Überwallungskörpers,
- Einbringen eines Oberflächenprofils in den Überwallungskörper,
- wobei zum Einbringen des Oberflächenprofils ein Fräsverfahren, ein Walzverfahren oder ein Prägeverfahren, insbesondere ein Rändelverfahren, verwendet wird.

Weitere Gegenstände der Erfindung werden nachfolgend aufgelistet. Sämtliche der vorhergehend beschriebenen Aspekte und der nachfolgend beschriebenen Gegenstände/Aspekte können miteinander kombiniert werden. Sie können auch jeweils jeder für sich als eigenständiger Aspekt Gegenstand eines Anspruchs bilden.

Die Erfindung betrifft eine Vorrichtung zum Verankern von Plattformen in Bäumen aufweisend einen sich von einem Einschraubende in Richtung einer Bolzenachse BA erstreckenden Gewindeschaft mit einem Kern mit einem Kerndurchmesser d_{7K} und mit einem Außengewinde mit einem Außendurchmesser d₇ und ein Mittel zum Komprimieren von Holzfasern, welches zwischen zwei Gewindeflanken angeordnet ist, wobei das Mittel zum Komprimieren in Richtung senkrecht zur Bolzenachse BA um eine Kompressionshöhe Kh über den Kern übersteht, wobei die Kompressionshöhe Kh kleiner ist als die Hälfte der Differenz zwischen dem Außendurchmesser d₇ und dem Kerndurchmesser d_{7K}.

Das Außengewinde der Vorrichtung kann eingängig ausgebildet sein.

Gemäß einem Aspekt kann sich das Mittel zum Komprimieren in Richtung parallel zur Bolzenachse BA über mindestens 70% der Gewindelänge erstrecken.

Gemäß einem Aspekt kann die Fläche des Mittels zum Komprimieren in einem Längsschnitt durch die Bolzenachse BA mindestens 5% der Fläche einer Gewindelücke betragen.

Gemäß einem Aspekt kann das Mittel zum Komprimieren in einem Längsschnitt durch die Bolzenachse BA zwischen zwei Gewindeflanken genau ein Maximum eines Abstandes r von der Bolzenachse BA aufweisen, wobei das Maximum des Abstandes r über die Position in Richtung der Bolzenachse BA variiert.

Gemäß einem Aspekt kann sich die Form des Mittels zum Komprimieren zwischen zwei Gewindeflanken in einem Längsschnitt durch die Bolzenachse BA durch eine differenzierbare Funktion r(l) beschreiben lassen.

Gemäß einem Aspekt kann das Mittel zum Komprimieren aus demselben Material bestehen, wie der Kern des Gewindeschaftes.

Gemäß einem Aspekt kann das Mittel zum Komprimieren einteilig mit dem Kern des Gewindeschaftes ausgebildet sein.

Gemäß einem Aspekt kann das Außengewinde zumindest in einem ersten Abschnitt asymmetrische Gewindeflanken aufweisen.

Gemäß einem Aspekt kann das Gewinde zumindest im ersten Abschnitt Gewindeflanken und Zahnflanken aufweisen, mit jeweils einem in einer Einschraubrichtung vorderen Übergang von einer Gewindeflanke zur Zahnflanke und einem in Einschraubrichtung hinteren Übergang von einer Gewindeflanke zur Zahnflanke, wobei der hintere Übergang einen kleineren Krümmungsradius aufweist als der vordere Übergang.

Die Offenbarung betrifft außerdem ein Verfahren zum Verankern einer Plattform in einem Baum umfassend die folgenden Schritte:
- Bereitstellen einer Vorrichtung gemäß der vorhergehenden Beschreibung,
- Einbringen einer Bohrung in einen Baum,
- Einschrauben des Gewindeschafts in die Bohrung,
- wobei Holzfasern im Bereich zwischen benachbarten Gewindeflanken durch das Mittel zum Komprimieren von Holzfasern komprimiert werden.

Die Offenbarung betrifft außerdem ein Verfahren zur Herstellung einer Vorrichtung gemäß der vorhergehenden Beschreibung umfassend die folgenden Schritte:
- Bereitstellen eines Gewindeschafts,
- Ausformen des Mittels zum Komprimieren in einem separaten oder in mehreren separaten Verfahrensschritten.

Gemäß einem Aspekt der Erfindung kann die Vorrichtung ein Mittel zum Komprimieren eines Werkstückmaterials aufweisen. Beim Werkstückmaterial kann es sich insbesondere um die Holzfasern eines Baumes, insbesondere um Kernholz, handeln. Es kann sich grundsätzlich auch um ein anderes Material, insbesondere um ein kompressibles Material handeln.

Eine entsprechende Vorrichtung (Verankerungsvorrichtung, Baumbolzen, Schraube) mit einem Mittel zum Komprimieren kann insbesondere auch zur Verankerung einer Schraube in anderen kompressiblen Materialien vorteilhaft eingesetzt werden.

Die Verwendung der Vorrichtung zur Verankerung von Plattformen ist exemplarisch zu verstehen. Die Vorrichtung kann ebenso zur Verankerung anderer Bauelemente, beispielsweise Seile, insbesondere Drahtseile, Befestigungselemente oder Ähnlichem, verwendet werden.

Das Mittel zum Komprimieren kann insbesondere in Richtung senkrecht zu einer Bolzenachse über den Kern der Vorrichtung überstehen. Es kann insbesondere als Erhöhung auf einem, insbesondere parallel zur Bolzenachse verlaufenden oder gedachten, Gewindegrund ausgebildet sein.

Es kann auch mehrere derartige Erhöhungen umfassen.

Das Mittel zum Komprimieren bildet eine Profilierung einer äußeren Oberfläche des Bolzens. Der Bolzen kann insbesondere zumindest abschnittsweise, insbesondere über mindestens 30%, insbesondere über mindestens 50%, insbesondere über mindestens 75% der Erstreckung des Verankerungsabschnitts, eine entsprechende Profilierung aufweisen.

Die Oberfläche des Bolzens weist insbesondere eine Profilierung mit einer in Richtung parallel zur Bolzenachse (BA) variierenden Kompressionshöhe (Kh) auf.

Gemäß einem Aspekt steht das Mittel zum Komprimieren in Richtung senkrecht zur Bolzenachse um eine Kompressionshöhe Kh über dem Kern, wobei die Kompressionshöhe kleiner ist als die Hälfte der Differenz zwischen dem Außendurchmesser d₇ des Gewindes und dem Kerndurchmesser d_{7K} der Vorrichtung.

Das Mittel zum Komprimieren kann, in einer Längsschnittansicht durch die Bolzenachse, in Radialrichtung um eine Kompressionshöhe Kh über den Kerndurchmesser d_{7K} überstehen, wobei gilt: Kh : (0,5 (d₇ - d_{7K})) < 0,5, insbesondere Kh : (0,5 (d₇ - d_{7K})) < 0,3, insbesondere Kh : (0,5 (d₇ - d_{7K})) < 0,25, insbesondere Kh : (0,5 (d₇ - d_{7K})) < 0,2, insbesondere Kh : (0,5 (d₇ - d_{7K})) < 0,1.

Für das Verhältnis von Kompressionshöhe Kh zu Gewindehöhe (0,5 (d₇ - d_{7K})) kann insbesondere gelten: Kh : (0,5 (d₇ - d_{7K})) > 0,05, insbesondere Kh : (0,5 (d₇ - d_{7K})) > 0,1, insbesondere Kh : (0,5 (d₇ - d_{7K})) > 0,15, insbesondere Kh : (0,5 (d₇ - d_{7K})) > 0,2, insbesondere Kh : (0,5 (d₇ - d_{7K})) > 0,25.

Die Kompressionshöhe Kh kann mindestens 0,3 mm, insbesondere mindestens 0,5 mm, insbesondere mindestens 1 mm, insbesondere mindestens 2 mm, insbesondere mindestens 3 mm betragen.

Für einen Einsatz in Bäumen kann die Kompressionshöhe Kh insbesondere maximal 1 cm, insbesondere maximal 5 mm betragen.

Das Mittel zum Komprimieren kann den Kern der Vorrichtung umfangsseitig insbesondere zu mindestens 30%, insbesondere mindestens 50%, insbesondere mindestens 75%, insbesondere mindestens 90%, insbesondere vollständig, umgeben. Diese Angabe bezieht sich insbesondere auf eine Betrachtung entlang einer zwischen den Gewindegängen verlaufenden Schraubenlinie mit gleicher Steigung wie die Gewindegänge.

Das Mittel zum Komprimieren kann sich insbesondere in Richtung parallel zu den Gewindegängen, d.h. mit gleichbleibendem Abstand zu diesen, erstrecken. Es kann hierbei insbesondere über jeweils mindestens 25°, insbesondere über jeweils mindestens 40°, insbesondere über jeweils mindestens 55°, insbesondere über jeweils mindestens 85°, insbesondere über jeweils mindestens 115°, insbesondere über jeweils mindestens 170°, zusammenhängend, insbesondere mit gleichbleibender Form in einem Längsschnitt, ausgebildet sein.

Die Kompressionshöhe Kh, insbesondere die maximale Kompressionshöhe max(Kh), insbesondere der Verlauf der Kompressionshöhe Kh in Richtung parallel zur Bolzenachse, kann in Richtung parallel zu den Gewindegängen insbesondere konstant sein.

Das Mittel zum Komprimieren kann insbesondere ein in Richtung parallel zu den Gewindegängen gleichbleibendes Profil aufweisen.

Das Mittel zum Komprimieren kann insbesondere zumindest abschnittsweise derart ausgebildet sein, dass seine Form zwischen zwei benachbarten Gewindeflanken bei einem Längsschnitt in Richtung parallel zu und durch die Bolzenachse unabhängig von der Orientierung der Schnittebene ist.

Hierdurch kann das Einschrauben des Bolzens erleichtert werden.

Gemäß einer Alternative kann das Profil des Mittels zum Komprimieren, insbesondere die maximale Kompressionshöhe Kh, entlang einer zwischen den Gewindegängen verlaufenden Schraubenlinie mit gleicher Steigung wie die Gewindegänge auch variieren. Es kann insbesondere um bis zu 50% variieren.

Mit Hilfe des Kompressionsmittels kann das Werkstückmaterial im Bereich zwischen zwei benachbarten Gewindeflanken, insbesondere im Bereich einer Gewindelücke, komprimiert werden. Dies kann zu einem verbesserten Sitz der Vorrichtung im Werkstück führen. Es kann insbesondere zu einer erhöhten Ausreißkraft führen.

Im Folgenden beziehen sich Angaben zur Geometrie des Gewindes, soweit nichts anderes angegeben oder offensichtlich ist, stets auf eine Längsschnittansicht durch die Bolzenachse.

Gemäß einem weiteren Aspekt der Erfindung, kann die Vorrichtung ein ein- oder mehrgängiges Gewinde im Verankerungsabschnitt aufweisen.

Ein eingängiges Gewinde ist besonders einfach herstellbar. Es kann insbesondere zu einem besonders sicheren Halt der Vorrichtung im Werkstoff führen.

Ein mehrgängiges Gewinde kann insbesondere ein schnelleres Ein- und Ausschrauben ermöglichen.

Durch ein mehrgängiges Gewinde kann insbesondere im Vergleich zu einem eingängigen Gewinde mehr Weg in oder entgegen der Einschraubrichtung mit weniger Umdrehungen erreicht werden.

Das ein- und mehrgängige Gewinde kann insbesondere eine selbsthemmende Wirkung aufweisen.

Unter einer selbsthemmenden Wirkung sei insbesondere ein durch Reibung verursachter Widerstand gegen ein Verrutschen oder Verdrehen verstanden.

Das Gewinde kann sich spiralförmig auf dem Gewindeschaft um eine Bolzenachse von einem ersten Ende des Gewindeschafts in Richtung eines zweiten Endes erstrecken. Das erste Ende wird auch als Einschraubende bezeichnet.

Das Gewinde kann sich insbesondere über mindestens 70 %, insbesondere mindestens 80 %, insbesondere mindestens 90 % und insbesondere 100 % der Länge des Verankerungsabschnitts erstrecken.

Das Gewinde kann insbesondere direkt am Einschraubende beginnen. Dies erleichtert das Einschrauben der Vorrichtung. Die Vorrichtung kann insbesondere derart ausgebildet sein, dass sie sich beim Einschrauben in eine Bohrung von selbst in diese hineinzieht. Dies ist insbesondere hilfreich, sofern die Vorrichtung in eine Bohrung eingebracht werden soll, deren Durchmesser kleiner ist als der Kerndurchmesser des Gewindeschafts.

Um das Ansetzen und Einschrauben der Vorrichtung weiter zu vereinfachen und erleichtern, kann der Kern des Gewindeschafts zum Einschraubende hin leicht konisch zulaufen. Er kann insbesondere im Bereich des Einschraubendes einen Durchmesser aufweisen, welcher um bis zu 1 mm, insbesondere um bis zu 2 mm, insbesondere bis zu 3 mm geringer ist als in einem Mittenbereich des Verankerungsabschnitts oder im Bereich des zweiten Endes.

Gemäß einem Aspekt kann das Mittel zum Komprimieren lediglich in einem Teilbereich des Verankerungsabschnitts oder im gesamten Verankerungsabschnitt ausgebildet sein.

Der Teilbereich kann sich über insbesondere mindestens 25 %, insbesondere mindestens 50 %, insbesondere mindestens 70 %, insbesondere mindestens 80 % und insbesondere mindestens 90 % der Gesamtlänge des Verankerungsabschnitts erstrecken. Eine größere Erstreckung kann zu einer höheren Ausreißkraft führen.

Der Teilbereich kann sich über höchstens 90 %, insbesondere höchstens 70 %, insbesondere höchstens 50 %, insbesondere höchstens 30 % der Gesamtlänge des Verankerungsabschnitts erstrecken. Eine geringere Erstreckung kann zu einer einfacheren Herstellung der Vorrichtung führen.

Der Teilbereich kann sich in Richtung der Bolzenachse insbesondere über mindestens eine Ganghöhe, insbesondere mindestens zwei Ganghöhen, insbesondere mindestens drei Ganghöhen, insbesondere mindestens 5 Ganghöhen erstrecken,

Unter einer Gewindelücke kann der freie Bereich zwischen benachbarten Gewindeflanken, insbesondere - in einer Längsschnittansicht - die freie Fläche zwischen vorderer und hinterer Gewindeflanke verstanden werden. Die tatsächliche Gewindelücke wird durch die Oberfläche des Gewindes, insbesondere die Gewindeflanken und den Gewindegrund, und eine Verbindungslinie zwischen benachbarten Zahnflanken begrenzt.

Zur Gewindelücke kann im Folgenden auch der vom Kompressionsmittel eingenommene Bereich gezählt werden. In diesem Fall wird die Gewindelücke innen durch eine Linie parallel zur Bolzenachse im Abstand des halben Kerndurchmessers zu dieser begrenzt.

Die Gewindelücke wird auch als profilierte Einkerbung oder kurz nur als Einkerbung bezeichnet.

Die Breite der Gewindelücke kann insbesondere mindestens 3 mm, insbesondere mindestens 4 mm, insbesondere mindestens 4,5 mm, insbesondere mindestens 5 mm betragen, gemessen vom Übergang einer Gewindeflanke zu Gewindegrund zum Übergang einer nächsten Gewindeflanke zum selben Gewindegrund.

Für Laubholz kann die Breite der Gewindelücke im Gewindegrund insbesondere 3 mm betragen.

Für Nadelholz kann die Breite der Gewindelücke im Gewindegrund insbesondere mehr als 4 mm betragen.

Als Fläche des Mittels zum Komprimieren kann die Querschnittsfläche desselben - in einem Längsschnitt durch die Bolzenachse - zwischen zwei Gewindeflanken gemessen ab dem Außenumfang des Kerns der Vorrichtung bezeichnet werden.

Die Fläche des Mittels zum Komprimieren kann insbesondere mindestens 5%, insbesondere mindestens 10 %, insbesondere mindestens 20 %, insbesondere mindestens 30 %, insbesondere mindestens 40 %, insbesondere mindestens 50 % der Fläche der Gewindelücke oder der tatsächlichen Gewindelücke betragen.

Die Fläche des Mittels zum Komprimieren kann insbesondere höchstens 60 %, insbesondere höchstens 50 %, insbesondere höchstens 40 %, insbesondere höchstens 30 %, insbesondere höchstens 20 %, insbesondere höchstens 10 % der Fläche der Gewindelücke oder der tatsächlichen Gewindelücke betragen.

Gemäß einem Aspekt der Erfindung weist das Mittel zum Komprimieren mindestens ein Maximum eines Abstandes von der Bolzenachse auf. Es kann insbesondere genau ein Maximum aufweisen.

Das Maximum kann sich mittig zwischen zwei Gewindeflanken befinden. Das Maximum kann sich auch außermittig zwischen zwei Gewindeflanken befinden. Es kann insbesondere in Richtung der Bolzenachse im vorderen Drittel oder im hinteren Drittel zwischen zwei Gewindeflanken liegen.

Das Maximum oder die Maxima können genau in einem Punkt oder über eine Strecke angenommen werden. Im ersten Fall spricht man von einem echten Maximum und im zweiten Fall von einem Plateau.

Die Erstreckung des Plateaus in Längsrichtung kann insbesondere maximal 50 %, insbesondere 30 %, insbesondere 20 % der Gewindesteigung betragen.

Das Mittel zum Komprimieren kann zwei oder mehr Minima aufweisen.

Unter einem Minimum ist ein Punkt verstanden, für den gilt, dass in einer hinreichend kleinen Umgebung auf dem Mittel zum Komprimieren der Abstand zur Bolzenachse nicht kleiner wird.

Die verschiedenen Minima können insbesondere denselben Abstand rₘᵢₙ zur Bolzenachse aufweisen. Sie können auch unterschiedliche Abstände rₘᵢₙ₁, rₘᵢₙ₂ zur Bolzenachse aufweisen.

Das Maximum des Abstands kann über die Position in Richtung der Bolzenachse variieren, insbesondere monoton variieren.

Das Maximum des Abstands kann insbesondere entgegen der Einschraubrichtung zunehmen. Es kann auch in Einschraubrichtung zunehmen. Beides kann zu einem verbesserten Ausreißverhalten führen.

Die Variation des Maximums kann insbesondere mindestens 5 %, insbesondere mindestens 10 % betragen, das heißt, das Maximum des Abstands des Mittels zum Komprimieren von der Bolzenachse kann an einer ersten Position in Einschraubrichtung um mindestens 5 %, insbesondere mindestens 10 % größer sein als an einer hiervon beabstandeten zweiten Position in Einschraubrichtung.

Die Variation der Maxima kann insbesondere kleiner sein als 20 %, insbesondere höchstens 15 %, insbesondere höchstens 10 %.

Gemäß einem Aspekt kann sich die Form des Mittels zum Komprimieren zwischen zwei benachbarten Gewindegängen in einer Längsschnittansicht durch die Bolzenachse durch eine differenzierbare Funktion r(l) beschreiben lassen. Hierbei gibt r den Abstand zur Bolzenachse, 1 die Position in Richtung der Bolzenachse an.

Insbesondere kann die Funktion r(1) ein Polynom vierten Grades sein.

Am Maximum kann die Kurve durch einen Kreisbogenabschnitt beschrieben werden.

Der Übergang von einer Gewindeflanke zum Kompressionsmittel ist insbesondere abgerundet. Sie kann in einer Längsschnittansicht insbesondere differenzierbar sein. Hierunter sei verstanden, dass der Übergang zwischen einer Gewindeflanke und dem Kompressionsmittel keine Knickstelle hat.

Der minimale Krümmungsradius am Übergang von einer Gewindeflanke zum Kompressionsmittel kann insbesondere mindestens 0,1 cm, insbesondere mindestens 0,2 cm, insbesondere mindestens 0,5 cm, insbesondere mindestens 1 cm betragen.

Durch diese Geometrie werden Lufteinschlüsse im Material beim Einschrauben der Vorrichtung vermieden.

Gemäß einem Aspekt der Erfindung kann das Mittel zum Komprimieren aus demselben Material bestehen wie der Kern des Gewindeschaftes. Es kann auch aus einem anderen Material, insbesondere einem weicheren Material bestehen.

Das Mittel zum Komprimieren kann insbesondere aus einem kompressiblen Material bestehen.

Das Mittel zum Komprimieren kann einteilig mit dem Kern des Gewindeschaftes ausgebildet sein.

Es kann auch auf den Kern aufgebracht werden. Dadurch kann ein Bolzen oder eine Schraube mit einem Mittel zum Komprimieren nachgerüstet werden.

Gemäß einem weiteren Aspekt kann die Vorrichtung einen Verankerungsabschnitt mit einem Gewinde aufweisen, dessen Gewindeflanken asymmetrisch ausgebildet sind. Das Gewinde des Verankerungsabschnitts kann zumindest in einem ersten Abschnitt asymmetrische Gewindeflanken aufweisen. Hierbei kann der erste Abschnitt ein echter Teilabschnitt des Gewindes sein. Er kann sich beispielsweise über höchstens 90 %, insbesondere höchstens 70 %, insbesondere höchstens 50 % des gesamten Gewindeabschnitts erstrecken. Alternativ hierzu kann das Gewinde des Verankerungsabschnitts über seine gesamte Länge asymmetrische Gewindeflanken aufweisen.

Unter asymmetrischen Gewindeflanken sei insbesondere verstanden, dass die dem ersten Ende des Bolzens zugewandte Flanke, welche auch als vordere Flanke bezeichnet wird, eine andere Form aufweist als die dem ersten Ende des Bolzens abgewandte Flanke, welche auch als hintere Flanke bezeichnet wird.

Die vordere Flanke kann insbesondere weniger steil als die hintere Flanke ausgebildet sein.

Der Übergang von der vorderen Flanke zur Zahnflanke kann insbesondere weniger scharfkantig ausgebildet sein als der Übergang von der hinteren Flanke zur Zahnflanke.

Dieser Aspekt ist unabhängig von weiteren Details der Vorrichtung. Er unterstützt ein schonendes Einbringen der Vorrichtung in das Werkstück, insbesondere einen Baum, bei gleichzeitiger Verbesserung der Ausreißkraft.

Gemäß einem weiteren Aspekt der Erfindung weist das Gewinde zumindest im ersten Abschnitt Gewindeflanken auf, deren Übergang zur Zahnflanke auf ihrer den ersten Enden zugewandten Seite abgerundet ausgebildet sind. Es kann insbesondere vorgesehen sein, die vordere Flanke des Gewindes, insbesondere an ihrem Übergang zur Zahnflanke, abgerundet auszubilden.

Unter einer abgerundeten Ausbildung sei hierbei insbesondere verstanden, dass ein minimaler Krümmungsradius der Gewindeflanke, insbesondere im Bereich des Außenumfangs des Gewindes, mindestens 0,2 mm, insbesondere mindestens 0,3 mm, insbesondere mindestens 0,5 mm beträgt.

Durch eine abgerundete Ausbildung der vorderen Gewindeflanken kann ein Zerschneiden der Holzfasern beim Eindrehen des Bolzens verhindert werden. Außerdem kann hierdurch das Eindreh-Drehmoment verringert werden.

Die hintere Gewindeflanke, insbesondere deren Übergang zur Zahnflanke, kann vorzugsweise scharfkantig ausgebildet sein. Unter einer scharfkantigen Ausbildung sei insbesondere eine Ausbildung mit einem minimalen Krümmungsradius von höchstens 0,1 mm, insbesondere höchstens 0,05 mm, insbesondere höchstens 0,03 mm, insbesondere höchstens 0,02 mm, insbesondere höchstens 0,01 mm verstanden.

Die hintere Flanke kann insbesondere senkrecht zur Bolzenachse ausgerichtet oder sogar spitzwinklig zu dieser angeordnet sein. Unter einer spitzwinkligen Anordnung sei hierbei verstanden, dass die Oberfläche des Bolzens im Bereich zwischen zwei Gewindeflanken und die jeweils hintere Gewindeflanke einen spitzen Winkel einschließt. Der Winkel zwischen der hinteren Gewindeflanke und dem Außenmantel des Kerns des Verankerungsabschnitts beträgt insbesondere höchstens 90°, insbesondere höchstens 80°, insbesondere höchstens 70°.

Eine scharfkantige Ausbildung der hinteren Gewindeflanke, insbesondere deren Übergangs zur Zahnflanke, führt zu einem besonders hohen Ausreißmoment bzw. einer besonders hohen Ausreißkraft.

Eine abgerundete Ausbildung der vorderen Gewindeflanke, insbesondere deren Übergangs zur Zahnflanke, und/oder eine scharfkantige Ausbildung der hinteren Gewindeflanke, insbesondere deren Übergangs zur Zahnflanke, insbesondere eine Kombination einer abgerundeten vorderen Gewindeflanke, insbesondere deren Übergangs zur Zahnflanke, und einer scharfkantigen hinteren Gewindeflanke, insbesondere deren Übergangs zur Zahnflanke, kann einen unabhängigen Aspekt der Erfindung bilden und für sich genommen oder in Kombination mit weiteren Aspekte und Details zu Vorteilen führen.

Gemäß einem weiteren Aspekt der Erfindung weist die vordere Gewindeflanke einen minimalen Krümmungsradius rv und die hintere Gewindeflanke einen minimalen Krümmungsradius rh auf, wobei gilt: rv : rh ≥ 2, insbesondere rv : rh ≥ 3, insbesondere rv : rh ≥ 5.

Die vorderen und hinteren Gewindeflanken können unterschiedlich steil ausgebildet sein.

In einer Längsschnittansicht durch die Bolzenachse sind die Gewindeflanken insbesondere zumindest abschnittsweise, insbesondere über mindestens 50 %, insbesondere über mindestens 60 %, insbesondere über mindestens 70 %, insbesondere über mindestens 80% und insbesondere über mindestens 90 % der Gewindeflanke geradlinig.

Bei dem Gewinde kann es sich insbesondere um ein Sägezahngewinde handeln. Alternativ hierzu kann das Gewinde auch abgesehen von der Asymmetrie als Trapezgewinde ausgebildet sein. Prinzipiell kann der Bolzen auch ein symmetrisch ausgebildetes Trapezgewinde aufweisen.

Der Aspekt und die Details der Ausbildung des Gewindes können auch unabhängig von weiteren Details der Erfindung vorteilhaft sein.

Als Gewindeflanke wird der Oberflächenbereich des Gewindes zwischen den Zahnflanken und dem Gewindegrund bezeichnet. Eine Gewindeflanke beginnt ab dem Ende einer Zahnflanke und erstreckt sich in einem Längsschnitt durch die Bolzenachse insbesondere geradlinig in Richtung Bolzenachse, insbesondere bis zum Anfang einer Krümmung, insbesondere bis zum Anfang eines Gewindegrundes.

Eine Gewindeflanke befindet sich zwischen Zahnflanke und Gewindegrund. Sie kann insbesondere an Zahnflanke und/oder Gewindegrund angrenzen.

Die Gewindeflanken erstrecken sich in Längsrichtung insbesondere in Abschnitten zwischen zwei Punkten, an welchen Tangenten an die Oberfläche des Gewindes parallel zur Bolzenachse verlaufen. Sie sind schräg zur Bolzenachse orientiert.

Die Vorrichtung kann einen unebenen Gewindegrund aufweisen.

Unter einem Gewindegrund kann die Oberfläche des Bolzens zwischen zwei Zahnflanken, insbesondere zwischen zwei Gewindeflanken, verstanden werden.

Der Gewindegrund kann abschnittsweise geradlinig ausgebildet sein.

Gemäß einem Aspekt kann der Gewindegrund insbesondere einen oder mehrere gekrümmte Abschnitte aufweisen. Es kann insbesondere über seine gesamte Erstreckung in Richtung der Bolzenachse gekrümmt ausgebildet sein. Insbesondere kann sich dies auf eine Betrachtung in Richtung der Bolzenachse beziehen.

Der tiefste Punkt des Gewindegrunds, d.h. der Punkt zwischen zwei Gewindeflanken mit dem geringsten Abstand zur Bolzenachse, kann auf dem Kern der Vorrichtung liegen. Er kann auch in Radialrichtung beabstandet zum Kern der Vorrichtung sein.

Die Oberfläche des Gewindegrundes befindet sich insbesondere zwischen dem halben Kerndurchmesser von der Bolzenachse und dem halben Außendurchmesser von der Bolzenachse.

Je nach Material des Werkstückes kann die das Kompressionsmittel, insbesondere die Erhöhung des Gewindegrundes, unterschiedlich ausgestaltet sein.

Das Kompressionsmittel kann insbesondere eine konvexe Oberfläche aufweisen.

Das Kompressionsmittel kann einen Längsschnitt insbesondere symmetrisch zu einer Mittelebene ausgebildet sein. Dies dient insbesondere der gleichmäßigen Verteilung der Kräfte und dem gleichmäßigen, schonenden Komprimieren des Werkstückmaterials.

Das Kompressionsmittel kann insbesondere in einem Längsschnitt durch die Bolzenachse eine Oberfläche, insbesondere eine Berandung derselben, aufweisen, welche symmetrisch zu einer Ebene senkrecht zur Bolzenachse ist.

Alternativ hierzu kann das Kompressionsmittel auch asymmetrisch ausgebildet sein insbesondere keine derartige Symmetrieebene aufweisen.

Insbesondere kann das Mittel zum Komprimieren eine oder mehrere Erhebungen mit unterschiedlichen Höhen und Formen aufweisen. Die Erhebungen können sich über die Erstreckung der Vorrichtung an unterschiedlichen Stellen zwischen den Gewindeflanken befinden.

Das Mittel zum Komprimieren kann dem Werkstück, insbesondere einem Baum, insbesondere Holzfasern, gegenüber schonend sein, derart, dass es nicht in das Material des Werkstückes schneidet.

Das Gewinde weist zumindest im ersten Abschnitt Gewindeflanken und Zahnflanken auf, mit jeweils einem in einer Einschraubrichtung vorderen Übergang von Gewindeflanke zur Zahnflanke und einem in Einschraubrichtung hinteren Übergang von Gewindeflanke zur Zahnflanke. Gemäß einem weiteren Aspekt kann der hintere Übergang einen kleineren Krümmungsradius aufweisen als der vordere Übergang.

Unter einer Zahnflanke ist die Oberfläche des Gewindes, insbesondere eines Gewindezahns, zwischen einer vorderen und hinteren Gewindeflanke verstanden.

Der Außendurchmesser des Gewindes kann mindestens 15 mm, insbesondere mindestens 20 mm, insbesondere mindestens 25 mm, insbesondere mindestens 30 mm, insbesondere mindestens 40 mm betragen.

Der Kerndurchmesser kann mindestens 10 mm, insbesondere mindestens 15 mm, insbesondere mindestens 20 mm, insbesondere mindestens 25 mm, insbesondere mindestens 35 mm betragen.

Das Verhältnis vom Außendurchmesser zum Kerndurchmesser kann mindestens 1,2, insbesondere mindestens 1,5, insbesondere mindestens 2 betragen.

Unter einer Profilhöhe kann die Höhe eines Gewindezahnes, gemessen ab dem halben Kerndurchmesser von der Bolzenachse, verstanden werden. Die Profilhöhe ergibt sich insbesondere als Hälfte der Differenz zwischen Außendurchmesser des Gewindes und Kerndurchmesser.

Die Profilhöhe beträgt insbesondere mindestens 2,20 mm, insbesondere mindestens 3,20 mm, insbesondere mindestens 4,20 mm.

Das Verhältnis von Profilhöhe zur Kompressionshöhe kann mindestens 2 insbesondere mindestens3, insbesondere mindestens 5, insbesondere mindestens 10 betragen.

Das Verhältnis von Gewindesteigung zur Kompressionshöhe kann insbesondere mindestens 0,2, insbesondere mindestens 0,3, insbesondere mindestens 0,5, insbesondere mindestens 0,7 insbesondere mindestens 1 betragen.

Das Verhältnis von der Profilhöhe zum Kerndurchmesser kann insbesondere mindestens 0,05, insbesondere mindestens 0,15, insbesondere mindestens0,30, insbesondere mindestens 0,5 betragen.

Je nach Einsatzzweck kann das Mittel zum Komprimieren unterschiedlich ausgebildet sein. Beispielsweise kann die Fläche des Kompressionsmittels bei einer Vorrichtung zur Verwendung in Laubbäumen, insbesondere zur Verwendung im Hartholz wie beispielsweise Buche oder Eiche, kleiner sein als die Fläche des Kompressionsmittels bei einer Vorrichtung zur Verwendung in Nadelholz.

Gemäß einem weiteren Aspekt der Erfindung kann das Mittel zum Komprimieren nachrüstbar sein. Dies ermöglicht es, das Mittel zum Komprimieren nachträglich auf einem Gewindeschaft und oder Schraube aufzubringen.

Gemäß einem Aspekt der Erfindung weist die Vorrichtung ein Überwallungselement auf. Das Überwallungselement dient dazu, vom Baum umwachsen bzw. überwachsen zu werden. Dies unterstützt eine besonders zuverlässige, dauerhafte Verankerung der Vorrichtung im Baum.

Das Überwallungselement weist insbesondere einen Überwallungskörper mit einem größeren Außendurchmesser auf als der Verankerungsabschnitt. Es kann dadurch nach dem Einbringen der Vorrichtung in einen Baum an der Außenseite des Baumes bzw. an einer hierfür vorgesehenen Anlagefläche an der Außenseite des Baumes anliegen.

Der Außendurchmesser des Überwallungskörpers ist insbesondere mindestens doppelt, insbesondere mindestens dreimal, insbesondere mindestens fünfmal so groß wie der des Verankerungsabschnitts.

Das Überwallungselement kann eine Mantelfläche mit in Richtung der Bolzenachse gleichbleibendem Durchmesser oder eine kegelstumpfartige Mantelfläche aufweisen.

Der Überwallungskörper kann insbesondere eine zylinderartige, insbesondere eine kreiszylinderartige Mantelfläche aufweisen. Hierbei bezeichnet ein Zylinder einen allgemeinen Zylinder, welcher einen durch eine Leitkurve definierten im Wesentlichen beliebigen Querschnitt aufweisen kann. Der Querschnitt des Überwallungskörpers senkrecht zur Bolzenachse ist vorzugsweise rund, insbesondere kreisförmig, oder polygonal, insbesondere als regelmäßiges Viereck oder regelmäßiges Sechseck, ausgebildet. Der Überwallungskörper kann insbesondere kreiszylinderförmig, kegelstumpfförmig oder prismenförmig ausgebildet sein.

Der Überwallungskörper kann auch unterschiedliche, sich in Richtung der Bolzenachse erstreckende Abschnitte aufweisen. Er kann insbesondere einen prismenförmigen Abschnitt und/oder einen kreiszylinderförmigen Abschnitt und/oder einen kegelstumpfförmigen Abschnitt aufweisen.

Ein prismenförmiger Abschnitt kann das Aufschrauben des Überwallungskörpers und/oder das Einschrauben der Vorrichtung in einen Baum erleichtern. Ein kreiszylinderförmiger Abschnitt kann die Herstellung erleichtern. Ein kegelstumpfförmiger Abschnitt kann zu einer besonders guten Überwallung und insbesondere zu einer besonders zuverlässigen Verankerung der Vorrichtung in einem Baum führen.

Gemäß einem weiteren Aspekt der Erfindung kann die Vorrichtung zwei- oder mehrteilig ausgebildet sein.

Gemäß einem Aspekt der Erfindung umfasst die Vorrichtung einen Bolzen und ein Überwallungselement, welches lösbar mit dem Bolzen verbunden werden kann.

Es hat sich gezeigt, dass dies zu einer Verbesserung der Belastbarkeit der Vorrichtung führt. Gleichzeitig konnte der Aufwand zur Herstellung der Vorrichtung verringert werden. Die Vorrichtung ist insbesondere einerseits besonders zuverlässig, andererseits kostengünstig.

Erste Versuche in Referenzbuchen haben ergeben, dass der Bolzen bei einem Verankerungsabschnitt mit einem Durchmesser von 16 mm Auszugskräften von über 45 kN standhält. Die Vorrichtung hält vertikalen Belastungen von über 18 kN stand.

Gemäß einem Aspekt der Erfindung weist der Bolzen einen sich von einem ersten Ende in einer Längsrichtung erstreckenden Verankerungsabschnitt und einen sich in Längsrichtung zu einem zweiten Ende hin erstreckenden Kopplungsabschnitt auf. Die Richtung vom zweiten Ende zum ersten Ende wird auch als Einschraubrichtung bezeichnet. Sofern es auf die Orientierung nicht ankommt, wird die Richtung parallel zur Längsrichtung oder parallel zur Einschraubrichtung auch als Axialrichtung bezeichnet.

Das Überwallungselement ist insbesondere lösbar mit dem Kopplungsabschnitt des Bolzens verbindbar. Es kann insbesondere auf den Kopplungsabschnitt des Bolzens aufgeschraubt werden. Der Kopplungsabschnitt kann hierfür ein Gewinde, insbesondere ein Außengewinde, aufweisen. Der Kopplungsabschnitt kann insbesondere ein metrisches ISO-Gewinde aufweisen. Das Gewinde des Kopplungsabschnitts ist insbesondere passend zu einem entsprechenden Innengewinde im Überwallungselement. Das Überwallungselement ist insbesondere auf den Kopplungsabschnitt aufschraubbar.

Bei dem Gewinde des Kopplungsabschnitts und bei dem Gewinde des Überwallungselements kann es sich insbesondere um ein M10-, M12-, M14-, M16-, M18-, M20-Gewinde handeln. Diese Aufzählung ist nicht abschließend zu verstehen.

Gemäß einer Alternative kann das Überwallungselement auch einteilig mit dem Verankerungsabschnitt ausgebildet sein. Die Vorrichtung kann insbesondere insgesamt einteilig ausgebildet sein.

Gemäß einem weiteren Aspekt der Erfindung weist der Bolzen einen in Längsrichtung zwischen dem Verankerungsabschnitt und dem Kopplungsabschnitt angeordneten Übergangsabschnitt auf. Der Übergangsabschnitt kann insbesondere einen Außendurchmesser aufweisen, welcher größer ist als ein Kerndurchmesser des Verankerungsabschnitts und/oder ein Kerndurchmesser des Kopplungsabschnitts. Der Außendurchmesser des Übergangsabschnitts ist insbesondere um mindestens 10 % größer als der Kerndurchmesser des Verankerungsabschnitts und/oder des Kopplungsabschnitts.

Der Übergangsabschnitt kann als ein in Radialrichtung vom Bolzen vorstehender Ring ausgebildet sein. Er kann insbesondere eine zylindrische, insbesondere eine kreiszylindrische Form aufweisen. Er kann auch kegelstumpfförmig oder doppelt-konisch (bikonisch) ausgebildet sein.

Der Übergangsabschnitt kann eine kreiszylinderförmige Mantelfläche aufweisen. Der Übergangsabschnitt kann auch zum ersten Ende hin, das heißt gegen die Längsrichtung, leicht konisch zulaufen. Der Konvergenzwinkel beträgt insbesondere höchstens 10°, insbesondere höchstens 5°, insbesondere höchstens 3°. Er kann mindestens 1°, insbesondere mindestens 2°, insbesondere mindestens 3° betragen.

Der Übergangsabschnitt bildet insbesondere ein Dichtelement zum Abdichten einer Bohrung, in welche der Verankerungsabschnitt eingeführt, insbesondere eingeschraubt werden kann.

Der Übergangsabschnitt kann auch einen Abstützkragen bilden. Als Abstützkragen kann auch ein Bestandteil des Überwallungselements dienen. Der Abstützkragen kann beim Einschrauben des Bolzens in einen Baum im Splintholz versenkt werden.

Der Übergangsabschnitt kann insbesondere einen Außendurchmesser aufweisen, welcher dem Gewindedurchmesser des Verankerungsabschnitts entspricht. Der Außendurchmesser des Übergangsabschnitts weicht insbesondere um höchstens 10 %, insbesondere höchstens 5 % vom Gewindedurchmesser des Verankerungsabschnitts ab. Hierdurch kann eine besonders zuverlässige Abdichtung der Bohrung, in welche der Verankerungsabschnitt eingeschraubt wird, erreicht werden.

Der Außendurchmesser des Übergangsabschnitts ist insbesondere kleiner als der Außendurchmesser des Überwallungselements. Das Verhältnis des Außendurchmessers des Übergangsabschnitts zum Außendurchmesser des Überwallungsabschnitts beträgt insbesondere höchstens 4 : 5, insbesondere höchstens 3 : 4, insbesondere höchstens 2 : 3, insbesondere höchstens 1 : 2. Es hat sich gezeigt, dass sich hierdurch das Kosten-zu-Belastungsbarkeits-Verhältnis verbessern ließ.

Gemäß einem weiteren Aspekt der Erfindung umfasst die Vorrichtung ein in Längsrichtung konisch zulaufendes Kraftübertragungselement.

Der Konus ist insbesondere in Längsrichtung, das heißt gegen die Einführrichtung des Bolzens in die dafür vorgesehene Bohrung, konisch zulaufend. Durch die konische Ausbildung des Kraftübertragungselements wird das auf die Vorrichtung wirkende Biegemoment besonders wirksam auf den Bolzen übertragen. Es hat sich gezeigt, dass hierdurch die Belastbarkeit der Vorrichtung erheblich verbessert werden konnte.

Der Konvergenzwinkel, welcher gerade dem halben Öffnungswinkel eines an die konisch zulaufende Außenfläche des Kraftübertragungselements angepassten Kegels entspricht, liegt insbesondere im Bereich von 1° bis 30°. Er beträgt insbesondere höchstens 20°, insbesondere höchstens 15°, insbesondere höchstens 10°, insbesondere höchstens 5°. Er kann insbesondere mindestens 2°, insbesondere mindestens 3° betragen.

Gemäß einem weiteren Aspekt der Erfindung ist das Kraftübertragungselement einstückig mit dem Bolzen, insbesondere einstückig mit dem Übergangsabschnitt ausgebildet.

Alternativ hierzu kann das Kraftübertragungselement auch auf den Bolzen aufgeschraubt sein.

Auch der Übergangsabschnitt kann als ein auf den Bolzen aufschraubbares Element ausgebildet sein.

Auch das Kraftübertragungselement kann als Dichtelement dienen.

Das Kraftübertragungselement kann auch den Übergangsabschnitt bilden.

Gemäß einem weiteren Aspekt der Erfindung liegt das konisch zulaufende Kraftübertragungselement am Übergangsabschnitt an oder ist einteilig mit diesem ausgebildet.

Gemäß einem weiteren Aspekt der Erfindung ist der Bolzen aus Stahl, insbesondere aus Edelstahl, insbesondere aus rostfreiem Stahl. Der Bolzen kann insbesondere aus Maschinenstahl gefertigt sein. Er kann insbesondere mit einer Korrosionsschutzschicht versehen sein, insbesondere in Form einer kathodischen Tauchlackierung (KTL).

Gemäß einer vorteilhaften Variante kann das Material des Bolzens in Abhängigkeit von der Baumart gewählt werden. Zum Einschrauben in Nadelbäume können die Bolzen vorzugsweise verzinkt sein. Für alle anderen Baumarten mit Ausnahme von Eichen kann der Bolzen vorzugsweise aus V2A-Stahl, insbesondere CrNi-Stahl 1.4301, 1.4541 oder 1.4307, gefertigt sein. Für die Verwendung in Eichen ist aufgrund von Gerbsäurebildung ein V4A-Stahl, insbesondere CrNiMo-Stahl 1.4401, 1.4571 oder 1.4404, vorteilhaft. Die übrigen Bestandteile der Vorrichtung sind vorzugsweise aus demselben Material wie der Bolzen.

Gemäß einem weiteren Aspekt der Erfindung weist das Überwallungselement eine Ausnehmung auf, deren Form derart an die konische Form des Kraftübertragungselements angepasst ist, dass eine formschlüssige Verbindung zwischen dem Überwallungselement und dem Kraftübertragungselement herstellbar ist.

Die Form der Ausnehmung des Überwallungselements ist insbesondere komplementär zur konischen Form, insbesondere zum konischen Bereich des Kraftübertragungselements.

Das Überwallungselement kommt insbesondere beim Verbinden mit dem Bolzen, insbesondere beim Aufschrauben auf den Kopplungsabschnitt des Bolzens, zum Anlegen am Kraftübertragungselement. Es kann insbesondere flächig am Kraftübertragungselement anliegen. Es liegt vorzugsweise über den gesamten Mantelbereich der Ausnehmung am Kraftübertragungselement an. Hierdurch ist eine besonders gute Kraft- und Momentübertragung zwischen dem Überwallungselement und dem Kraftübertragungselement und damit dem Bolzen gewährleistet.

Die Tiefe der Ausnehmung, das heißt deren Erstreckung in Längsrichtung, kann insbesondere gerade so groß sein wie die Erstreckung des konischen Abschnitts des Kraftübertragungselements in Längsrichtung. Sie kann auch etwas geringer sein als die Erstreckung des konischen Abschnitts des Kraftübertragungselements. Sie kann insbesondere um mindestens 1 mm geringer sein als die Erstreckung des konischen Abschnitts des Kraftübertragungselements in Längsrichtung. Hierdurch kann vermieden werden, dass auf das Überwallungselement einwirkende Biegemomente zu Spannungsbelastungen des Verankerungsabschnitts im Baum führen. Die Vorrichtung ermöglicht insbesondere eine im Wesentlichen spannungsfreie Anordnung des Bolzens in einem Baum. Sie ist damit besonders schonend für den Baum.

Gemäß einem weiteren Aspekt der Erfindung weist der Verankerungsabschnitt ein Gewinde auf. Bei dem Gewinde kann es sich vorzugsweise um ein asymmetrisches Gewinde, insbesondere ein Sägengewinde, oder ein Trapezgewinde, handeln. Das Gewinde kann insbesondere an das Wachstum des Baumes angepasst sein. Das Gewinde kann insbesondere in Anlehnung an das Model der Astanbindung nach Axel Shigo ausgebildet sein. Es kann insbesondere derart ausgebildet sein, dass es die Holzfasern des Stamms nicht zerschneidet, sondern lediglich verdrängt. Die Holzfasern werden beim Einschrauben des Verankerungsabschnitts zur Seite gepresst, insbesondere gegeneinandergepresst. Dies führt zu einer Selbstverfestigung. Der Verankerungsabschnitt bildet mit anderen Worten die natürliche Astanbindung nach. Auch hierdurch kann eine schonende Anbringung des Bolzens im Baum verbessert werden. Die Gewindetiefe übernimmt die Funktion der Astausläufer.

Gemäß einer vorteilhaften Variante kann die Gewindehöhe des Verankerungsabschnitts an die Dicke, insbesondere die mittlere Dicke der Jahresringe des Baums, in welchen der Bolzen eingeschraubt werden soll, angepasst sein. Es kann insbesondere vorgesehen sein, unterschiedliche Bolzen mit Verankerungsabschnitten mit unterschiedlichen Gewindehöhen bereitzustellen.

Gemäß einem weiteren Aspekt der Erfindung kann das Überwallungselement ein sich in Längsrichtung erstreckendes Innengewinde aufweisen. Das Innengewinde ermöglicht insbesondere die Aufnahme eines Befestigungselements, beispielsweise einer Gewindestange oder einer Schraube.

Bei dem Gewinde handelt es sich vorzugsweise um ein metrisches Gewinde, insbesondere ein ISO-Gewinde. Es kann sich beispielsweise um ein M8-, M10-, M12-, M14-, M16-, M18-, M20-, M22-Gewinde handeln. Diese Aufzählung ist nicht einschränkend zu verstehen.

Das Überwallungselement kann in Längsrichtung eine Erstreckung von mindestens 1 cm, insbesondere von mindestens 2 cm, insbesondere von mindestens 3 cm, insbesondere von mindestens von 5 cm und insbesondere von mindestens 6 cm aufweisen. Es kann vorgesehen sein, unterschiedliche Überwallungselemente bereitzustellen. Hierdurch kann auf unterschiedlich schnelles Wachstum des Gehölzes, in welches der Bolzen eingeschraubt werden soll, Rücksicht genommen werden. Vorzugsweise beträgt die Länge des Überwallungselements in Längsrichtung mindestens die Hälfte des Wachstums des Baumes in Radialrichtung plus 1 cm, sofern der Bolzen für Plattformen verwendet werden soll. Für die Verwendung für Baumhäuser werden vorzugsweise Überwallungselemente mit einer mindestens doppelt so großen Erstreckung in Längsrichtung verwendet.

Eine weitere Aufgabe der Offenbarung besteht darin, ein Überwallungselement für eine Vorrichtung zum Verankern von Plattformen in Bäumen zu verbessern.

Diese Aufgabe wird durch ein Überwallungselement mit einem Überwallungskörper und einer endseitig am Überwallungskörper angeordneten, konisch ausgebildeten Ausnehmung gelöst.

Die Vorteile ergeben sich aus den vorhergehend beschriebenen.

Der Überwallungskörper hat insbesondere einen rotationssymmetrischen Außenumfang. Er kann insbesondere eine zylinderförmige, insbesondere eine kreiszylinderförmige Mantelfläche aufweisen.

Es kann jedoch auch vorteilhaft sein, am Außenumfang des Überwallungskörpers symmetriebrechende Mittel vorzusehen, beispielsweise Anlageflächen für Einschraubmittel, insbesondere Anlageflächen für einen Schraubenschlüssel.

Es kann auch vorteilhaft sein, den Überwallungskörper konisch zulaufend, insbesondere kegelstumpfförmig auszubilden. Dies führt einerseits zu einem schöneren Erscheinungsbild, andererseits wird hierdurch der Ausziehwiderstand der Vorrichtung erhöht, wenn es mit der Zeit zu einer Überwallung des Überwallungselements kommt. Gemäß einer besonders bevorzugten Variante weist der Überwallungskörper einen Abschnitt mit einer kreiszylinderförmigen Mantelfläche und einen sich daran anschließenden Abschnitt mit einer konisch zulaufenden, insbesondere kegelstumpfförmig ausgebildeten Mantelfläche auf.

Bezüglich weiterer Details des Überwallungselements sei auf die vorhergehende Beschreibung verwiesen.

Das Überwallungselement kann insbesondere ein sich von einem dem ersten Ende entgegengesetzten zweiten Ende axial erstreckendes Innengewinde aufweisen.

Der Überwallungskörper kann insbesondere an seinem zweiten Ende umfangsseitig scharfkantig ausgebildet sein. Hierdurch kann eine formschlüssige Verbindung zum Plattformholz bewirkt werden.

Unter dem zweiten Ende sei insbesondere das dem ersten Ende des Bolzens entgegengesetzte Ende des Überwallungskörpers verstanden.

Der Überwallungskörper kann einen hexagonalen Querschnitt aufweisen. Er kann beispielsweise als M30 oder mehr, insbesondere M35 oder mehr, insbesondere M40 oder mehr Sechskant ausgebildet sein.

Ein sechskantig ausgebildeter Überwallungskörper ist insbesondere für eine Plattformbefestigung vorteilhaft.

Der Überwallungskörper kann insbesondere einen Durchmesser aufweisen, welcher größer ist als der Durchmesser des Übergangsabschnitts.

Der Überwallungskörper kann auch einen kreisförmigen Außendurchmesser aufweisen. Der Außendurchmesser des Überwallungskörpers kann insbesondere mindestens 30 mm, insbesondere mindestens 35 mm, insbesondere mindestens 40 mm betragen.

Ein Überwallungskörper mit einem kreisförmigen Außendurchmesser kommt insbesondere bei einer Vorrichtung zum Anbringen eines Sicherungsseils in einem Baum zum Einsatz.

Eine weitere Aufgabe der Offenbarung besteht darin, ein Verfahren zum Verankern einer Plattform oder eines Sicherungsseils in einem Baum zu verbessern.

Diese Aufgabe wird durch ein Verfahren mit folgenden Schritten gelöst:
- Bereitstellen einer Vorrichtung gemäß der vorherigen Beschreibung,
- Einbringen einer Bohrung, insbesondere einer Stufenbohrung, in einen Baum,
- Einschrauben des Gewindeschafts in die Bohrung,
- wobei Holzfasern im Bereich zwischen benachbarten Gewindeflanken durch das Mittel zum Komprimieren von Holzfasern komprimiert werden.

Gemäß einem Aspekt kann die Bohrung einen Durchmesser aufweisen, welcher kleiner, gleich oder größer als der Kerndurchmesser der Vorrichtung ist.

Insbesondere bei Verwendung in weichem Holz, insbesondere Nadelholz, kann die Bohrung einen Durchmesser aufweisen, welcher kleiner, insbesondere mindestens 1 mm kleiner, insbesondere mindestens 2 mm kleiner als der Kerndurchmesser der Vorrichtung ist. Dies kann dazu führen, dass die Holzfasern beim Einschrauben des Gewindeschafts besonders stark komprimiert werden, insbesondere in Radialrichtung zur Bolzenachse.

Insbesondere bei Verwendung in Hartholz, insbesondere Buche oder Eiche, kann die Bohrung einen Durchmesser aufweisen, welcher größer als der Kerndurchmesser der Vorrichtung ist.

Der Durchmesser der Bohrung kann insbesondere um bis zu 1 mm, insbesondere bis zu 2 mm größer sein als der Kerndurchmesser. Dies kann das Einschrauben des Gewindeschafts erleichtern.

Der Raum zwischen der Wand der Bohrung und dem Gewindeschaft kann mittels eines Mediums ausgefüllt werden. Das Medium kann als Mittel zur Kompression dienen.

Als Medium kann insbesondere ein im Ausgangspunkt flüssiges Medium dienen. Es kann sich insbesondere um ein aushärtendes, insbesondere ein selbstaushärtendes Medium handeln.

Es kann sich vorzugsweise um ein Medium handeln, welches sich beim Aushärten ausdehnt. Die Volumenausdehnung des Mediums beim Aushärten kann unter Normalbedingungen bis zu 10 %, insbesondere bis zu 30 %, insbesondere bis zu 50 %, insbesondere bis zu 100 % betragen. Die Volumenausdehnung des Mediums beim Aushärten kann unter Normalbedingungen höchstens 100 %, insbesondere höchstens 50 %, insbesondere höchstens 30 %, insbesondere 20 %, insbesondere höchstens 10 % betragen.

Gemäß einem vorteilhaften Aspekt, kann das Medium eine abdichtende und/oder eine antibakterielle Wirkung aufweisen. Dadurch kann die Verankerung der Vorrichtung im Holz verbessert werden.

Das Medium kann hydrophil sein. Dies kann zu einer besonders guten biologischen Verträglichkeit führen.

Alternativ hierzu kann das Medium auch hydrophob sein. Dadurch kann eine Reaktion mit einer stets im Stamm eines Baumes vorhandenen Flüssigkeit verhindert werden.

Das Medium kann vor dem Einschrauben der Vorrichtung in die sacklochartige Bohrung im Werkstück, insbesondere in die Bohrung im Holz, insbesondere im Stamm eines Baumes, eingefüllt werden.

Das Medium wird dann beim Einschrauben der Vorrichtung zumindest teilweise in den Bereich zwischen dem Gewindeschaft und der Bohrungswand, insbesondere in den Bereich zwischen den Gewindeflanken, insbesondere in die Bereiche der Gewindelücken, gedrängt. Dort kann es zu einer Kompression des Werkstücks, insbesondere des Holzes, insbesondere im Bereich zwischen den Gewindeflanken führen.

Das Medium kann auch vor Einschrauben der Vorrichtung auf den Verankerungsabschnitt aufgebracht werden. Hierdurch kann eine vollständigere Verteilung des Mediums im Gewindebereich erreicht werden.

Dieser Effekt kann dadurch verstärkt werden, dass es sich um ein aushärtendes Medium handelt, insbesondere derart, dass es bei einem Erhärten des Mediums zu einer Ausdehnung desselben kommt.

Beim Einschrauben der Vorrichtung kann insbesondere das Überwallungselement an einer Anlagestufe der Stufenbohrung zum Anliegen kommen.

Gemäß einem Aspekt kann das Überwallungselement im Falle einer zwei- oder mehrteiligen Ausbildung der Vorrichtung vor oder nach dem Einschrauben des Verankerungsabschnitts des Bolzens in die Stufenbohrung mit dem Bolzen verbunden werden.

Die Stufenbohrung weist eine innere Bohrung und eine Anlagestufe auf. Hierbei ist die Anlagestufe vorzugsweise innerhalb des Kambiums des Baums angeordnet. Dies kann durch eine geeignete Wahl der Einbohrtiefe erreicht werden. Dadurch, dass die Anlagestufe innerhalb des Kambiums liegt, übt das Überwallungselement keinen Druck auf das Kambium aus. Es hat sich gezeigt, dass dies zu einer verbesserten Überwallung des Überwallungselements führt.

Die Stufenbohrung kann beispielsweise mit einem Staketenbohrer eingebracht werden. Hierbei ist der Bohrkopf vorzugsweise an die geometrischen Abmessungen der Verankerungsvorrichtung angepasst. Der vordere Teil des Bohrers ist insbesondere an die Geometrie des Verankerungsabschnitts des Bolzens angepasst. Der hintere Teil des Bohrkopfes ist insbesondere an die Geometrie des Überwallungselements angepasst. Er weist insbesondere den gleichen Außendurchmesser wie das Überwallungselement auf.

Die Stufenbohrung dient insbesondere zur Aufnahme des Verankerungsabschnitts und zur teilweisen Aufnahme des Überwallungselements.

Der Bolzen wird vorzugsweise derart in die Stufenbohrung, das heißt in den Baum, eingeschraubt, dass der Verankerungsabschnitt spannungsfrei im Holz ist. Dies ist für den Baum besonders schonend. Ein belastungsfreier Einbau des Bolzens kann durch ein geeignetes Eindrehwerkzeug sichergestellt werden. Der Bolzen wird hierbei so weit in den Baum eingeschraubt, bis das Werkzeug an der Stufenbohrung anliegt. Anschließend wird das Werkzeug abgenommen und das Überwallungselement auf den Kopplungsabschnitt aufgeschraubt. Er wird insbesondere so weit auf den Kopplungsabschnitt des Bolzens aufgeschraubt, bis er an der Stufenbohrung anliegt.

Vorzugsweise kann vorgesehen sein, vor dem Einschrauben des Verankerungsabschnitts die Bohrung zunächst zu säubern und/oder zu desinfizieren. Die Kernbohrung kann insbesondere mit Hilfe einer Bürste gesäubert werden. Zur Desinfizierung des Bohrers und/oder der Bohrung kann beispielsweise eine Dibromoltinktur oder ein Nosocomiaspray verwendet werden.

Durch eine Desinfizierung kann das Risiko von Fäulnis oder Krankheit im Baum verringert werden.

Zum Einschrauben des Verankerungsabschnitts des Bolzens in den inneren Teil der Stufenbohrung kann eine abnehmbare Bolzenführung auf den Bolzen, insbesondere auf den Verankerungsabschnitt, aufgebracht werden. Die Bolzenführung weist vorzugsweise einen Außenumfang auf, welcher dem des Überwallungselements entspricht. Sie passt somit gerade formschlüssig in die Stufenbohrung. Die Bolzenführung kann zweiteilig ausgebildet sein. Sie kann insbesondere entlang einer Mittellängsebene geteilt sein. Dies erleichtert es, die Bolzenführung auf den Bolzen aufzustecken beziehungsweise von diesem abzunehmen. Die Verwendung einer Bolzenführung erleichtert das präzise Einsetzen der Verankerungsvorrichtung in die Stufenbohrung.

Gemäß einem weiteren Aspekt der Erfindung wird ein den Verankerungsabschnitt umgebender Bereich der Stufenbohrung beim Einschrauben des Bolzens abgedichtet.

Der innere Bereich der Stufenbohrung, welcher auch als Kernbohrung bezeichnet wird, wird insbesondere durch den Übergangsabschnitt des Bolzens und/oder durch das Kraftübertragungselement abgedichtet.

Es kann insbesondere vorgesehen sein, den Bolzen so weit in die Stufenbohrung einzuschrauben, dass der Übergangsabschnitt in die Kernbohrung hineingezogen wird, insbesondere so weit, dass der äußere Rand des Übergangsabschnitts schlüssig mit der Anlagefläche der Anlagestufe der Stufenbohrung zu liegen kommt.

Gemäß einem weiteren Aspekt der Erfindung wird zur Verbesserung der Abdichtung ein Dichtmittel, insbesondere ein flüssiges Dichtmittel, vor Einschrauben des Bolzens in die Stufenbohrung eingebracht. Es kann sich um ein aushärtendes Dichtmittel handeln. Es kann sich insbesondere um Baumwachs oder um ein Gemisch aus Baumharz und Wachs handeln. Dies ist für den Baum besonders schonend. Außerdem führt dies zu einer besonders zuverlässigen Abdichtung der Bohrung. Hierdurch kann ein Eindringen von Flüssigkeit in die Bohrung und damit Fäulnisbildung wirksam verhindert werden.

Eine weitere Aufgabe der Offenbarung Z Mieher besteht darin, ein Verfahren zur Herstellung einer Vorrichtung zur Verankerung von Plattformen in Bäumen zu verbessern.

Diese Aufgabe wird durch ein Verfahren mit folgenden Schritten gelöst:
- Bereitstellen eines Gewindeschafts mit einem Außengewinde und einem Außengewindedurchmesser,
- Ausformen des Mittels zum Komprimieren in einem oder in mehreren separaten Verfahrensschritten, insbesondere in zwei Verfahrensschritten.

Es kann sich insbesondere um ein mehrstufiges Verfahren handeln. Ein mehrstufiges Verfahren kann die Herstellung erleichtern. Insbesondere kann zur Ausformung des Mittels zum Komprimieren ein Spezialwerkzeug verwendet werden.

Das Mittel zum Komprimieren kann selbst in mehreren Verfahrensschritten hergestellt werden. Es ist insbesondere möglich, zunächst einen zu einer Gewindeflanke benachbarten Bereich des Mittels zum Komprimieren herzustellen und anschließend, in einem separaten Verfahrensschritt, den zur gegenüberliegenden Gewindeflanke benachbarten Bereich des Mittels zum Komprimieren herzustellen, Dies hat sich für die Bearbeitung des Gewindeschafts als vorteilhaft erwiesen.

Das Verfahren ermöglicht eine sehr kostengünstige Herstellung der Vorrichtung. Es wird insbesondere die Menge des Materialabtrags reduziert. Hierdurch werden insbesondere die Materialkosten für die Herstellung des Bolzens verringert.

Das Mittel zum Komprimieren kann auch nachträglich auf ein bereits bestehendes Gewinde beziehungsweise eine Schraube aufgebracht oder in dieses eingebracht werden.

Bei den Verfahrensschritten zur Herstellung des Mittels zum Komprimieren kann es sich insbesondere um spanende Bearbeitungsschritte, insbesondere um Dreh-, Fräs- oder Schleifverfahrensschritte, handeln.

Das Mittel zum Komprimieren kann auch mittels eines oder mehrerer additiver Verfahrensschritte auf einen Gewindeschaft oder einen Bolzen aufgebracht werden. Dies ermöglicht es insbesondere, das Mittel zum Komprimieren aus einem Material auszubilden, welches sich vom Material des Kerns der Vorrichtung unterscheidet.

Das Gewinde wird insbesondere in den als Verankerungsabschnitt dienenden Bereich eingebracht. Bezüglich der Details des Gewindes wird auf die vorhergehende Beschreibung verwiesen.

Das Gewinde kann insbesondere mittels eines Fräs- oder Drehverfahrens hergestellt werden. Es kann insbesondere in den als Verankerungsabschnitt dienenden Bereich gedreht oder gefräst werden. Es kann insbesondere CNC-gefräst oder -gedreht werden.

Unterschiedliche Aspekte der Erfindung, insbesondere die ein- oder mehrteilige Ausführung der Vorrichtung, die Details des Gewindes auf dem Verankerungsabschnitt, insbesondere die asymmetrische Ausbildung des Gewindes, insbesondere der vorderen und hinteren Übergänge von den Zahnflanken zu den Gewindeflanken, die Details des Kompressionsmittels und die Details des Überwallungselements können jeweils für sich genommen Grundlage für vorteilhafte Ausführungen der insgesamt auch als Baumbolzen bezeichneten Vorrichtung bilden. Sie können auch im Wesentlichen frei miteinander kombiniert werden und dadurch zu besonders vorteilhaften Ausführungsformen führen.

Die Tatsache, dass nicht sämtliche vorteilhaften Ausführungsformen durch separate, insbesondere unabhängige Ansprüche abgedeckt wurden, ist ausschließlich auf Kostengründe und/oder das Erfordernis der Einheitlichkeit zurückzuführen. Es soll insbesondere vorbehalten bleiben, weitere vorteilhafte Merkmalskombinationen durch unabhängige Ansprüche zu schützen im Wege von Teilanmeldungen.

Weitere Merkmale und Vorteile der Erfindung ergeben sich aus der Beschreibung unterschiedlicher Varianten derselben anhand der Figuren. Es zeigen:
- Fig. 1: schematisch eine Schnittdarstellung einer Vorrichtung zum Verankern von Plattformen in Bäumen mit einem Bolzen und einem Überwallungselement,
- Fig. 2: eine schematische Darstellung gemäß Fig. 1 einer Variante der Verankerungsvorrichtung,
- Fig. 3: eine schematische Darstellung gemäß Fig. 1 einer weiteren Variante der Verankerungsvorrichtung,
- Fig. 4: schematisch eine Darstellung der Verankerungsvorrichtung gemäß Fig. 1 in einem in einen Baum eingebrachten Zustand,

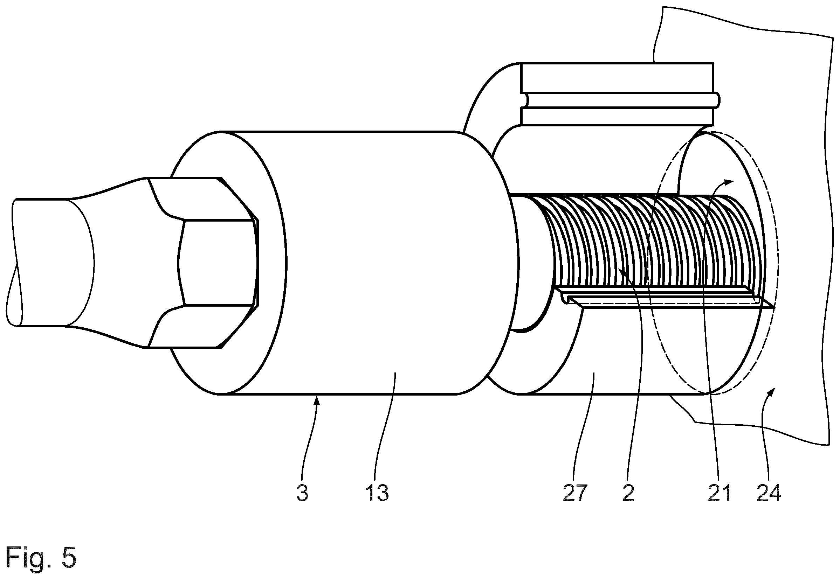

- Fig. 5: exemplarisch eine Darstellung zur Erläuterung eines Verfahrens zum Einbringen der Verankerungsvorrichtung in einen Baum,
- Fig. 6: exemplarisch eine schematische Darstellung gemäß Fig. 1 einer weiteren Variante der Verankerungsvorrichtung und
- Fig. 7: schematisch eine vergrößerte Darstellung der Gewindeflanken des Gewindes auf dem Verankerungsabschnitt zur Erläuterung einer bevorzugten Ausführungsform.
- Fig. 8: schematisch eine vergrößerte Darstellung des Gewindegrundes auf dem Verankerungsabschnitt zur Erläuterung einer bevorzugten Ausführungsform.
- Fig. 9 bis Fig. 11: schematisch Ausführungen der Verankerungsvorrichtung mit einem profilierten Überwallungselement.
- Fig. 12: eine schematische Ansicht eines Überwallungselements mit einer profilierten Oberfläche.

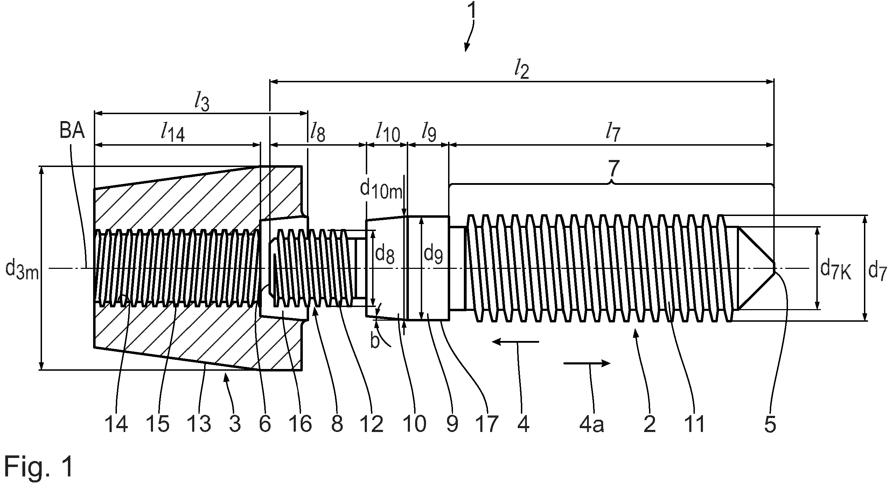

Im Folgenden wird unter Bezugnahme auf die Fig. 1 eine Vorrichtung 1 zum Verankern von Plattformen in Bäumen beschrieben.

Die Vorrichtung 1 umfasst einen Bolzen 2 und ein Überwallungselement 3.

Der Bolzen 2 erstreckt sich in einer Längsrichtung 4 von einem ersten Ende 5 zu einem zweiten Ende 6. Das erste Ende 5 wird auch als inneres Ende oder Einschraubende bezeichnet. Das zweite Ende 6 wird auch als äußeres Ende bezeichnet. In den Figuren ist die Längsrichtung 4 entgegengesetzt zu einer Einschraubrichtung 4a orientiert. Der Bolzen 2 weist eine sich in Längsrichtung 4 erstreckende Bolzenachse BA auf.

Der Bolzen 2 umfasst einen sich vom ersten Ende 5 in Längsrichtung 4 erstreckenden Verankerungsabschnitt 7.

Der Bolzen 2 umfasst einen sich in Längsrichtung 4 zum zweiten Ende 6 hin erstreckenden Kopplungsabschnitt 8.

Zwischen dem Verankerungsabschnitt 7 und dem Kopplungsabschnitt 8 ist ein Übergangsabschnitt 9 angeordnet.

Der Übergangsabschnitt 9 weist eine kreiszylindermantelförmige Außenfläche 17 auf.

Die Vorrichtung 1 umfasst ein Kraftübertragungselement 10.

Das Kraftübertragungselement 10 ist einteilig mit dem Übergangsabschnitt 9 ausgebildet oder liegt direkt an dem Übergangsabschnitt 9 an. Das Kraftübertragungselement 10 kann insbesondere einen Bestandteil des Übergangsabschnitts 9 bilden.

Der Bolzen 2 kann insbesondere einteilig ausgebildet sein. Er kann insbesondere aus einem einteiligen Rohling gedreht sein.

Im Bereich des Verankerungsabschnitts 7 weist der Bolzen 2 zumindest in einem ersten Abschnitt 7a ein Gewinde 11 auf. Das Gewinde 11 ist insbesondere als Trapezgewinde ausgebildet.

Im Bereich des Kopplungsabschnitts 8 weist der Bolzen 2 ein Gewinde 12 auf. Das Gewinde 12 ist insbesondere als metrisches ISO-Gewinde ausgebildet.

Das Kraftübertragungselement 10 ist in Längsrichtung 4 konisch zulaufend ausgebildet. Der Konvergenzwinkel b beträgt 3°. Er liegt allgemein im Bereich von 1° bis 30°, vorzugsweise bei höchstens 25°, vorzugsweise bei höchstens 20°, vorzugsweise bei höchstens 15°, vorzugsweise bei höchstens 10°, vorzugsweise bei höchstens 5°. Er beträgt insbesondere mindestens 1°, insbesondere mindestens 2°.

Das Überwallungselement 3 weist einen Überwallungskörper mit einer kreiszylindermantelförmigen Außenfläche 13 auf.

Das Überwallungselement 3 weist eine Durchgangsbohrung 14 auf. In der Durchgangsbohrung 14 ist ein Innengewinde 15 vorgesehen. Das Innengewinde 15 ist passend zum Gewinde 12 am Kopplungsabschnitt 8 des Bolzens 2 ausgebildet.

Das Überwallungselement 3 weist eine endseitige Ausnehmung 16 auf.

Die Ausnehmung 16 ist sacklochartig ausgebildet.

Die Ausnehmung 16 ist insbesondere komplementär zum Kraftübertragungselement 10 angeordnet. Dies ermöglicht eine formschlüssige Verbindung zwischen dem Überwallungselement 3 und dem Kraftübertragungselement 10.

Das Überwallungselement 3 ist mit dem Bolzen 2 verbindbar. Es ist insbesondere auf den Kopplungsabschnitt 8 aufschraubbar. Hierbei kommt es zu einem direkten Kontakt zwischen dem Kopplungsabschnitt 8 und der Ausnehmung 16. Der Kopplungsabschnitt 8 kommt insbesondere flächig zum Anliegen an der Ausnehmung 16. Er liegt insbesondere im Wesentlichen über seinen gesamten Mantelbereich an der Ausnehmung 16 an.

Im verbundenen Zustand des Überwallungselements 3 mit dem Bolzen 2 ist die Ausnehmung 16 vorzugsweise komplett ausgefüllt. Sie ist insbesondere vollständig durch das Kraftübertragungselement 10 ausgefüllt. Zur Verbesserung der Verbindung kann beim Verbinden des Überwallungselements 3 mit dem Bolzen 2 zunächst ein Füllmittel, insbesondere ein flüssiges Füllmittel, insbesondere ein aushärtendes Füllmitte, beispielsweise ein Klebstoff, in die Ausnehmung 16 eingebracht werden. Hierdurch kann erreicht werden, dass keine Hohlräume in der Ausnehmung 16 verbleiben.

Die Abmessungen des Bolzens 2 und des Überwallungselements 3 können je nach Bedarf, insbesondere in Abhängigkeit von den zu erwartenden Belastungen, gewählt werden. Kleinere Abmessungen führen zu einer schonenderen Anbringung der Vorrichtung am Baum. Größere Abmessungen erlauben höhere Belastungen. Im Folgenden seien exemplarisch konkrete Abmessungen für Bestandteile der Verankerungsvorrichtung 1 angegeben. Diese Angaben sind nicht einschränkend zu verstehen. Andere Abmessungen sind bei Bedarf ebenso möglich.

Die Länge l₂ des Bolzens 2, insbesondere die Länge l₇ des Verankerungsabschnitts 7, und der Durchmesser d₇ des Verankerungsabschnitts 7 können insbesondere in Abhängigkeit von der Baumart (Laub- oder Nadelholz) und/oder in Abhängigkeit vom Standard des Baumes gewählt werden.

Die Länge l₃ des Überwallungselements 3 kann aus einer Kernbohranalyse eines Referenzbaums am jeweiligen Standort ermittelt werden. Die Länge l₃ des Überwallungselements 3 kann insbesondere dem mittleren Zuwachs des Referenzbaumes in den letzten 10 Jahren plus 1 cm entsprechen.

Der Verankerungsabschnitt 7 kann eine Länge l₇ im Bereich von 1 cm bis 20 cm aufweisen. Die Länge l₇ des Verankerungsabschnitts 7 beträgt vorzugsweise mindestens 3 cm, insbesondere mindestens 5 cm.

Der Verankerungsabschnitt 7 weist insbesondere einen Außendurchmesser d₇, insbesondere einen Gewindedurchmesser von mindestens 8 mm, insbesondere mindestens 10 mm, insbesondere mindestens 12 mm, insbesondere mindestens 14 mm, insbesondere mindestens 16 mm, insbesondere mindestens 18 mm, insbesondere mindestens 20 mm, insbesondere mindestens 22 mm auf.

Der Übergangsabschnitt 9 weist eine Länge l₉ im Bereich von 0,5 cm bis 2 cm auf.

Der Übergangsabschnitt 9 weist einen Durchmesser d₉ auf, welcher um maximal 10 % vom Durchmesser d₇ des Verankerungsabschnitts 7 abweicht. Der Durchmesser d₉ entspricht vorzugsweise dem Durchmesser d₇, d₉ ≈ d₇. Der Durchmesser d₉ des Übergangsabschnitts 9 ist größer als ein Kerndurchmesser d_{7K} des Kerns des Verankerungsabschnitts 7. Es gilt insbesondere: d₉ : d_{7K} ≥ 1,05, insbesondere ≥ 1,1.

Das Kraftübertragungselement 10 weist einen maximalen Außendurchmesser d₁₀ₘ auf, welcher gerade so groß ist wie der Durchmesser d₉ des Übergangsabschnitts 9.

Das Kraftübertragungselement 10 weist eine Länge l₁₀ in Längsrichtung 4 auf im Bereich von 0,5 cm bis 5 cm, insbesondere im Bereich bis 4 cm, insbesondere im Bereich bis 3 cm, insbesondere im Bereich bis 2 cm.

Der Kopplungsabschnitt 8 kann einen Außendurchmesser d₈, insbesondere einen Gewindedurchmesser aufweisen, welcher dem Außendurchmesser d₇ des Verankerungsabschnitts 7 entspricht. Der Durchmesser d₈ des Kopplungsabschnitts 8 kann auch geringer sein als der Durchmesser d₇ des Verankerungsabschnitts 7.

Der Kopplungsabschnitt 8 weist eine Länge l₈ in Längsrichtung 4 auf, welche im Bereich von 1 cm bis 10 cm liegen kann. Die Länge l₈ beträgt insbesondere höchstens 8 cm, insbesondere höchstens 5 cm. Die Länge l₈ beträgt vorzugweise mindestens 2 cm, insbesondere mindestens 3 cm.

Die Länge l₈ ist kleiner als eine Länge l₁₄ der Durchgangsbohrung 14 des Überwallungselements 3. Es gilt insbesondere: l₈ : l₁₄ ≤ 2 : 3, insbesondere l₈ : l₁₄ ≤ 1 : 2.

Die Länge l₁₄ der Durchgangsbohrung 14 des Überwallungselements 3 kann im Bereich von 2 cm bis 20 cm liegen. Die Länge l₁₄ beträgt insbesondere höchstens 15 cm, insbesondere höchstens 10 cm, insbesondere höchstens 6 cm. Die Länge l₁₄ der Durchgangsbohrung 14 beträgt insbesondere mindestens 2 cm, insbesondere mindestens 3 cm, insbesondere mindestens 5 cm.

Das Überwallungselement 3 weist einen maximalen Außendurchmesser d₃ₘ im Bereich von 2 cm bis 25 cm auf. Der maximale Durchmesser d₃ₘ des Überwallungselements 3 beträgt insbesondere höchstens 20 cm, insbesondere höchstens 15 cm, insbesondere höchstens 10 cm. Der maximale Durchmesser d₃ₘ des Überwallungselements 3 beträgt insbesondere mindestens 3 cm, insbesondere mindestens 5 cm.

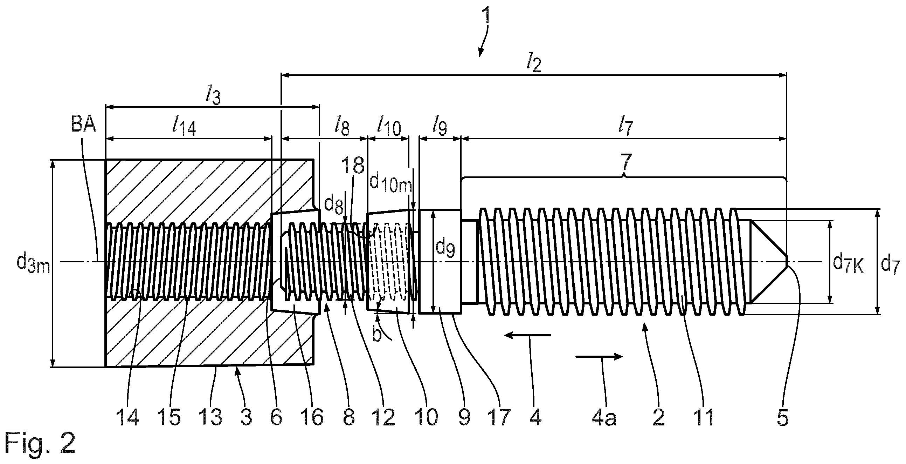

In der Fig. 2 ist eine Variante der Verankerungsvorrichtung 1 gezeigt. Identische Bauteile erhalten dieselben Bezugszeichen wie bei der Variante gemäß Fig. 1.

Bei der Variante gemäß Fig. 2 ist das Kraftübertragungselement 10 als separates Element ausgeführt. Der Kopplungsabschnitt 8 erstreckt sich bis zum Übergangsabschnitt 9. Das Kraftübertragungselement 10 kann auf den Übergangsabschnitt 9 aufgebracht, insbesondere aufgeschraubt werden. Es weist hierzu ein zum Gewinde 12 passendes Innengewinde 18 auf.

Diese Variante ermöglicht ein Nachrüsten bestehender Verankerungsvorrichtungen oder Baumschrauben, welche einen Kopplungsabschnitt mit einem Außengewinde, jedoch kein Kraftübertragungselement 10, insbesondere kein konisch zulaufendes Kraftübertragungselement 10 aufweisen.

Gemäß einer nicht in den Figuren dargestellten Variante kann entsprechend auch der Übergangsabschnitt 9 auf den Kopplungsabschnitt 8 aufschraubbar sein. In diesem Falle kann sich der Kopplungsabschnitt 8 direkt an den Verankerungsabschnitt 7 anschließen.

Bei dieser Variante können Übergangsabschnitt 9 und Kraftübertragungselement 10 vorteilhaft einstückig ausgebildet sein.

Gemäß einer ebenfalls nicht in den Figuren dargestellten Variante kann im Bereich zwischen dem Übergangsabschnitt und dem Kraftübertragungselement 10 eine Anlageschulter ausgebildet sein. Die Anlageschulter kann als radial zur Längsrichtung 4 nach außen vorspringender Ring ausgebildet sein. Die Anlageschulter kann die maximale Einschraubtiefe des Bolzens 2 definieren.

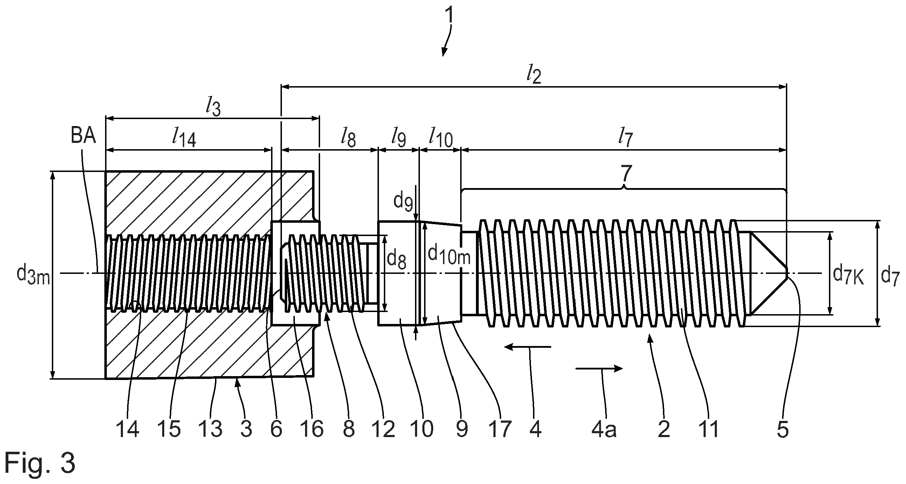

Gemäß einer weiteren, in der Fig. 3 exemplarisch dargestellten Variante, ist der Übergangsabschnitt 9 in Längsrichtung 4 konisch auseinanderlaufend ausgebildet. Er läuft mit anderen Worten in Einschraubrichtung 4a konisch zu, das heißt sein Durchmesser verringert sich. Hierdurch kann erreicht werden, dass es beim Einschrauben des Bolzens 2 in eine dafür vorgesehene Bohrung zu einer sukzessive zunehmenden Abdichtung der Bohrung kommt, wenn der Übergangsabschnitt 9 in die Bohrung hineingezogen wird.

Wie in der Fig. 3 ebenfalls exemplarisch dargestellt ist, kann das Kraftübertragungselement 10 auch eine kreiszylinderförmige Mantelfläche aufweisen. In diesem Fall ist die Ausnehmung 16 als kreiszylinderförmige Sacklochbohrung ausgebildet.

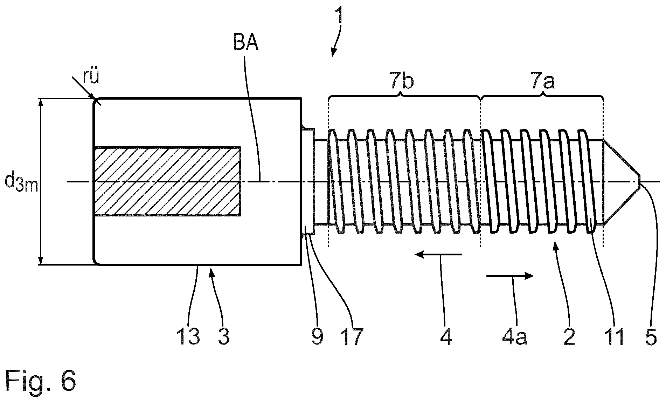

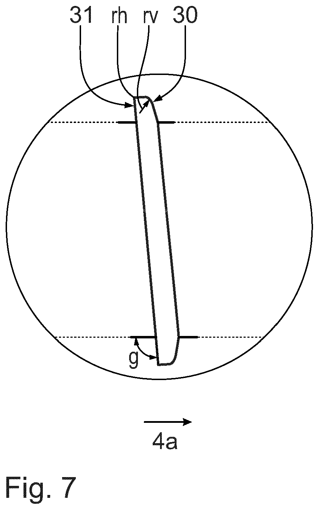

Im Folgenden wird unter Bezugnahme auf die Fig. 6 und 7 eine weitere Ausführungsform der Verankerungsvorrichtung 1 exemplarisch beschrieben.

Die wesentlichen Bestandteile der Verankerungsvorrichtung 1 entsprechen denen der vorhergehend beschriebenen Ausführungsformen, auf die hiermit verwiesen wird.

Bei der Ausführungsform gemäß den Fig. 6 und 7 weist das Gewinde auf dem Verankerungsabschnitt 7 in einem ersten Abschnitt 7a asymmetrisch ausgebildete Gewindeflanken 30, 31 auf (siehe insbesondere Fig. 7).

Die dem ersten Ende 5 des Bolzens 2 zugewandte Gewindeflanke 30, welche auch als vordere Gewindeflanke 30 bezeichnet wird, ist abgerundet ausgebildet.

Die dem ersten Ende 5 abgewandte Gewindeflanke 31, welche auch als hintere Gewindeflanke 31 bezeichnet wird, ist scharfkantig ausgebildet.

Die vordere Gewindeflanke 31 weist einen minimalen Krümmungsradius rv von mindestens 0,2 mm auf.

Die hintere Gewindeflanke 31 weist einen minimalen Krümmungsradius rh von höchstens 0,1 mm auf.

Die hintere Gewindeflanke 31 schließt einen Winkel g im Bereich von 60° bis 90° mit dem Außenumfang des Kerns des Bolzens 2 ein.

Die hintere Gewindeflanke 31 kann insbesondere senkrecht zum Kern des Bolzens 2 orientiert sein.

Der erste Abschnitt 7a des Verankerungsabschnitts 7 ist insbesondere im Bereich des ersten Endes 5 angeordnet. Er kann sich lediglich über einen Teilbereich des Verankerungsabschnitts 7 erstrecken. In diesem Falle weist der Verankerungsabschnitt 7 einen zweiten Abschnitt 7b auf. Das Gewinde im zweiten Abschnitt 7b kann abweichend vom Gewinde im ersten Abschnitt 7a ausgebildet sein. Das Gewinde im zweiten Abschnitt 7b kann insbesondere als Gewinde mit symmetrischen Gewindeflanken ausgebildet sein. Es kann insbesondere als Trapezgewinde ausgebildet sein.

Der erste Abschnitt 7a kann sich auch über die gesamte Länge des Verankerungsabschnitts 7 erstrecken.

Wie in der Fig. 6 exemplarisch dargestellt ist, kann die Verankerungsvorrichtung 1 einteilig ausgebildet sein. Es ist insbesondere möglich, den Übergangsabschnitt 9 einteilig mit dem Verankerungsabschnitt 7 auszubilden.

Es ist weiter möglich, das Überwallungselement 3 einstückig mit dem Übergangsabschnitt 9 und dem Verankerungsabschnitt 7 auszubilden. Dies ist prinzipiell auch bei den vorhergehend beschriebenen Ausführungsformen möglich.

Das Überwallungselement 3 kann einen hexagonalen Außenumfang aufweisen. Es kann auch einen kreisförmigen Außenumfang aufweisen. Auch dies ist bei den vorhergehend beschriebenen Ausführungsformen möglich.

Das Überwallungselement 3 ist insbesondere an seinem dem ersten Ende 5 entgegengesetzten zweiten Ende 6 umfangsseitig scharfkantig ausgebildet. Der Krümmungsradius rü des Überwallungselements 3 im Bereich der umfangsseitigen Begrenzung des zweiten Endes 6 beträgt insbesondere höchstens 0,1 mm.

Das Überwallungselement 3 kann insbesondere eine zylindermantelförmige Außenumfangsfläche, insbesondere eine kreiszylindermantelförmige Außenumfangsfläche, aufweisen.

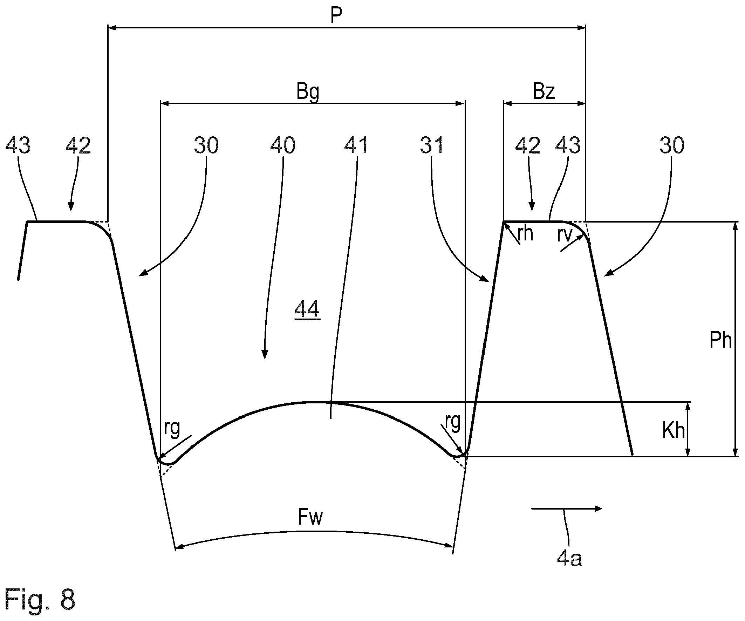

In der Fig. 8 ist exemplarisch ein Ausschnitt einer weiteren Variante des Gewindes der Vorrichtung 1 dargestellt. Zwischen zwei Gewindezähnen 42 ist exemplarisch ein Mittel zum Komprimieren 41 gezeigt. Zwischen den Gewindeflanken 30 und 31 liegt der Gewindegrund 40.

Das Mittel zum Komprimieren 41 kann eine symmetrisch ausgebildete Erhebung sein.

Das Mittel zum Komprimieren 41 kann eine konvexe Erhebung sein oder eine solche umfassen.

Die Profilhöhe Ph von einer Zahnflanke 43 zum äußeren Kerndurchmesser kann etwa 3 mm betragen.

Die Gewindelücke 44 kann eine mittlere Breite von 5 mm aufweisen.

Die Zahnflanke 43 kann insbesondere in Richtung der Bolzenachse eine Breite Bz von etwa 1 mm aufweisen. Sie kann insbesondere zwischen den Schnittpunkten von Tangenten an den Gewindeflanken mit einer Tangente an der Zahnflanke gemessen werden.

Der Gewindegrund 40 kann in Richtung der Bolzenachse eine Breite Bg von etwa 4 mm aufweisen, gemessen von einer vorderen Gewindeflanke bis zur nächsten hinteren Gewindeflanke.

Die Steigung des Gewindes P kann insbesondere etwa 6 mm betragen.

Der Flankenwinkel Fw kann insbesondere etwa 20° betragen.

Der Krümmungsradius rg im Gewindegrund kann insbesondere etwa 0,2 mm betragen.

Der Krümmungsradius rv am Übergang von Zahnflanke zur Gewindeflanke in Einschraubrichtung kann insbesondere etwa 0,5 mm betragen.

Diese Angaben sind exemplarisch und nicht einschränkend zu verstehen.

Die unterschiedlichen Details der Varianten, welche anhand der Fig. 1 bis 3, 6, 7 und 8 beziehungsweise ohne Bezugnahme auf eine Figur beschrieben wurden, sind frei miteinander kombinierbar. Insbesondere ist die ein-, zwei- oder mehrteilige Ausbildung des Bolzens 2 unabhängig von den geometrischen Details des Übergangsabschnitts 9 und/oder des Kraftübertragungselements 10 und/oder des Überwallungselements 3 und unabhängig von den Details des Gewindes auf dem Verankerungsabschnitt 7.

Im Folgenden wird exemplarisch ein Verfahren zum Verankern einer Plattform oder eines Sicherungsseils in einem Baum beschrieben. Selbstverständlich kann das Verfahren entsprechend zum Verankern anderer Konstruktionen in Bäumen oder Holzbalken verwendet werden.

Zunächst wird die Verankerungsvorrichtung 1 mit dem Bolzen 2 und dem Überwallungselement 3 bereitgestellt.

Sodann wird eine Bohrung in das Holz, insbesondere in den Stamm des Baumes, eingebracht. Hierbei kann zunächst eine Kernbohrung 20 in das Holz eingebracht werden. Diese kann anschließend zu einer Stufenbohrung 19 gemacht werden. Die Stufenbohrung 19 ist insbesondere mit Hilfe eines Staketenbohrers herstellbar.

Das Einbringen der Stufenbohrung 19 kann in einem einzigen Bohrungsschritt oder in zwei aufeinanderfolgenden Bohrungsschritten vorgenommen werden.

Die Stufenbohrung 19 weist eine Anlagestufe 21 auf.

Vorzugsweise wird die Kernbohrung 20 gesäubert, insbesondere desinfiziert.

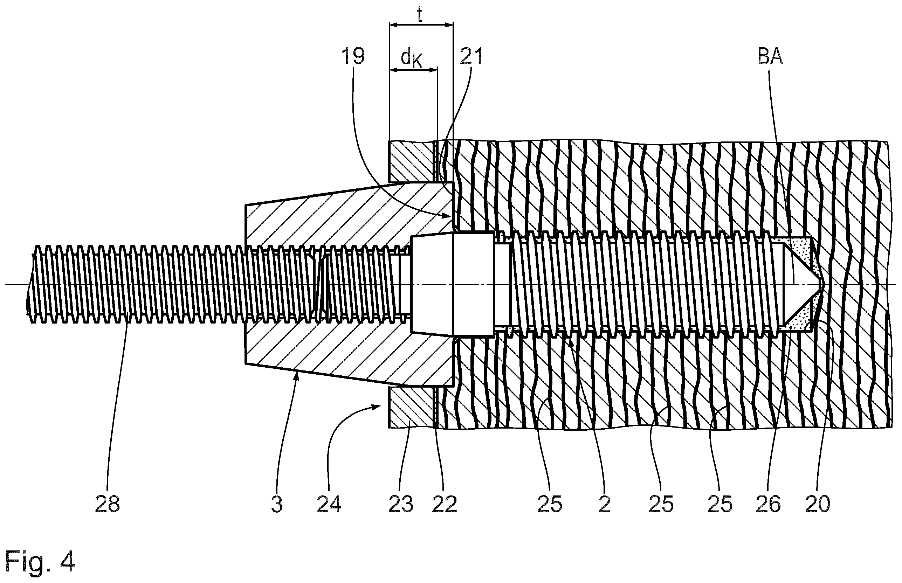

Der äußere Teil der Stufenbohrung 19 weist eine Tiefe t auf, welche größer ist als ein Abstand dₖ des innersten Bereichs des Kambiums 22 vom Außenumfang 23 des Baums 24, das heißt von der äußeren Oberfläche der Baumrinde. In der Fig. 4 sind exemplarisch noch Jahresringgrenzen 25 dargestellt.

Vor dem Einschrauben des Verankerungsabschnitts 7 in die Kernbohrung 20 wird vorzugsweise ein Abdichtmittel 26, insbesondere ein Baumharz-Wachs-Gemisch, in die Kernbohrung 20 eingebracht. Hierdurch kann eine Abdichtung, insbesondere eine luftdichte Abdichtung, der Kernbohrung 20 erreicht werden.

Allgemein kann vor dem Einschrauben des Verankerungsabschnitts 7 ein Medium in die Kernbohrung 20 eingebracht und/oder auf den Verankerungsabschnitt 7 aufgebracht werden, welches beim Einschrauben des Verankerungsabschnitts 7 als Mittel zur Kompression der die Bohrung umgebenden Holzfasern führt.

Zur präzisen Einbringung des Bolzens 2 in die Stufenbohrung 19 kann vorzugsweise eine Bolzenführung 27 auf den Verankerungsabschnitt 7 aufgebracht werden. Die Bolzenführung 27 ist zweigeteilt. Sie kann auch mehrteilig ausgebildet sein. Sie ist auf den Verankerungsabschnitt 7 aufsteckbar. Die Bolzenführung 27 weist im aufgesteckten Zustand insbesondere einen Außenumfang auf, welcher dem des Überwallungselements 3 entspricht.

Der Bolzen 2 wird in die Stufenbohrung 19 eingeschraubt. Der Bolzen 2 wird insbesondere so weit in die Stufenbohrung 19 eingeschraubt, dass der Übergangsabschnitt 9 die Kernbohrung 20 nach außen abdichtet. Der Bolzen 2 wird insbesondere so weit in die Kernbohrung 20 eingeschraubt, dass das äußere Ende des Übergangsabschnitts 9 gerade auf Höhe der Anlagestufe 21 zu liegen kommt. Der Übergangsabschnitt 9 befindet sich dann gerade am äußersten Ende der Kernbohrung 20.

Auch im Bereich der Anlagestufe 21 kann ein Dichtmittel, insbesondere ein Baumharz-Wachs-Gemisch, in die Stufenbohrung 19 eingebracht werden. Hierdurch kann eine Dichte, insbesondere eine flüssigkeits- und/oder luftdichte Verbindung zwischen dem Überwallungselement 3 und der Stufenbohrung 19 hergestellt werden. Hierdurch wird insbesondere die Gefahr reduziert, dass Flüssigkeit und/oder Schädlinge in die Stufenbohrung 19 eindringen können.

Zum Eindrehen des Bolzens 2 in die Kernbohrung 20 kann insbesondere ein Drehmomentschlüssel verwendet werden. Der Bolzen 2 kann somit mit einem vorbestimmten Drehmoment in die Kernbohrung 20 eingeschraubt werden. Zum Eindrehen des Bolzens 2 in die Kernbohrung 20 kann insbesondere auf den Kopplungsabschnitt 8 ein Eindrehadapter aufgeschraubt werden.

Zum Anbringen weiterer Befestigungselemente, beispielsweise einer Gewindestange 28, wird das Überwallungselement 3 auf den Kopplungsabschnitt 8 aufgeschraubt. Das Verbinden des Überwallungselements 3 mit dem Bolzen 2 kann vor oder nach dem Einschrauben des Bolzens 2 in die Kernbohrung 20 erfolgen.

Nach dem Einbringen der Verankerungsvorrichtung 1 kann der Baum 24 das Überwallungselement 3 überwallen. Der Baum 24 kann das Überwallungselement 3 insbesondere durch Reaktionsholzzuwachs überwallen. Hierbei hat es sich gezeigt, dass es von Vorteil ist, dass die Verankerungsvorrichtung 1 keinen Druck auf das Kambium 22 des Baums 24 ausübt. Das Wachstum des Baums 24 wird dadurch nur minimal beeinträchtigt.

Im Folgenden wird ein Verfahren zur Herstellung der Verankerungsvorrichtung 1 beschrieben.

Zur Herstellung der Verankerungsvorrichtung 1 wird ein Rohling bereitgestellt mit einer Länge, welche der Gesamtlänge l₂ des Bolzens 2 entspricht und einem Durchmesser. Sodann wird zur Ausbildung des Verankerungsabschnitts 7 ein Gewinde in den Rohling eingebracht.

Es ist mit anderen Worten nur ein sehr geringer Materialabtrag notwendig.

Danach wird das Mittel zum Komprimieren von einer Seite einer Gewindeflanke bis zur maximalen Erhöhung des Mittels zum Komprimieren ausgeformt. Anschließend wird das Mittel zum Komprimieren von der anderen Seite einer Gewindeflanke bis zur maximalen Erhöhung des Mittels zum Komprimieren ausgeformt. Hierbei wird der Durchmesser des Rohlings höchstens um 10 % reduziert.

Zur Ausformung des Mittels zum Komprimieren kann ein Drehverfahren, insbesondere mit zwei separaten Verfahrensschritten, dienen. Die Oberflächenform des Mittels zum Komprimieren kann durch speziell geformte Werkzeuge vorgegeben werden.

Zur Herstellung des Gewindes 11 des Verankerungsabschnitts 7 kann ein Drehverfahren, insbesondere ein CNC-Drehverfahren, dienen.

Der Bolzen 2 ist somit sehr präzise, schnell und kostengünstig herstellbar.

Eine zwei- oder mehrteilige Ausbildung der Verankerungsvorrichtung 1 ermöglicht auch eine Nachrüstung bestehender Baumschrauben.

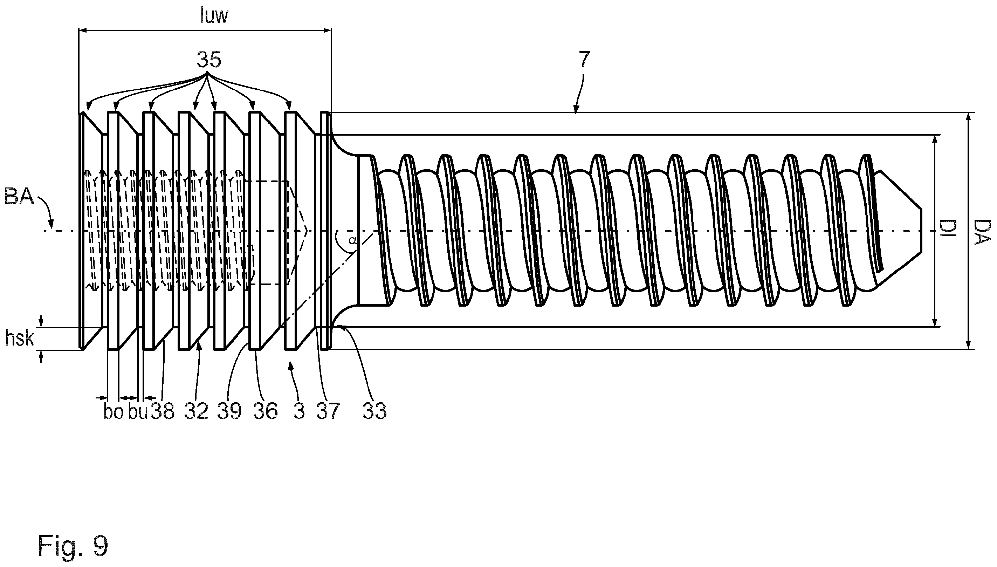

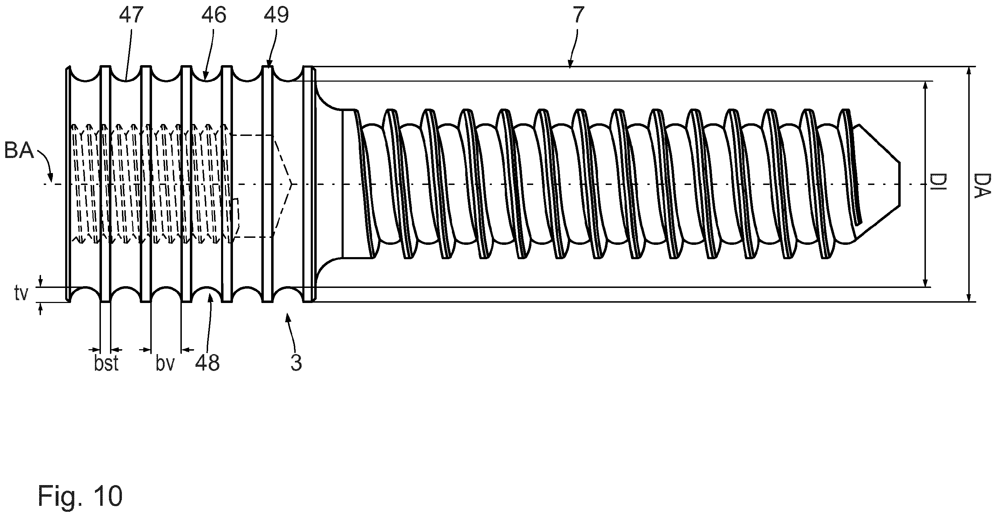

Nachfolgend werden unter Bezugnahme auf die Figuren 9 und 10 zwei weitere Ausführungsvarianten der Vorrichtung 1, insbesondere des Überwallungselements 3 beschrieben. Die Varianten unterscheiden sich insbesondere in den Details der Ausbildung der äußeren Oberfläche, insbesondere der Mantelfläche, des Überwallungselements 3. Für die Details des Bolzens 2 sowie weitere Details des Überwallungselements 3 sei auf die vorhergehende Beschreibung verwiesen.

Das Überwallungselement kann insbesondere auch bei den nachfolgend beschriebenen Ausführungsbeispielen einteilig mit dem Bolzen 2 ausgebildet oder separat zu diesem ausgebildet sein.

In Fig. 9 ist dabei exemplarisch das Überwallungselement 3 sowie eine Gewindestange 28 dargestellt. Die Gewindestange 28 erstreckt sich entgegen der Einschraubrichtung 4. Die Achse BA stellt die Mittelachse des Überwallungselements 3 dar. Sie kann insbesondere eine Symmetrieachse des Überwallungselements 3 bilden.

Das Überwallungselement 3 weist eine profilierte Oberfläche auf. Die Oberfläche weist in einem Längsschnitt insbesondere ein Sägezahnprofil 32 auf. In der Fig. 9 ist exemplarisch ein Sägezahnprofil 32 mit insgesamt sieben Sägezähnen 35 dargestellt. Es ist jedoch denkbar, dass auch Überwallungselemente 3 verwendet werden, deren Längsschnittprofil eine größere oder eine kleinere Zahl an Sägezähnen 35 aufweist. Das Überwallungselement 3 weist weiterhin ein erstes Ende 33 auf, dessen nach außen zeigende Normale parallel zur Einschraubrichtung 4a orientiert ist.

In das erste Ende 33 kann eine Ausnehmung 16 (in Fig. 9 nicht dargestellt) eingefasst sein. Sie kann zur Mittelachse BA symmetrisch ausgebildet sein.

Die Ausnehmung 16 erstreckt sich entgegen der Einschraubrichtung 4a in den Körper des Überwallungselements 3 hinein. Die Eindringtiefe erstreckt sich in der vorliegenden Figur über zwei der Sägezähne 35 hinweg. Es ist auch denkbar, dass die Ausnehmung 16 weiter in das Überwallungselement 3 hineinragt. Die Ausnehmung 16 durchdringt das Überwallungselement insbesondere nicht vollständig. Die Ausnehmung 16 ist insbesondere als Sackloch oder Sackbohrung ausgebildet.

Die Ausnehmung 16 kann insbesondere mit einem Innengewinde versehen sein. Die Ausnehmung 16 dient zur Verbindung des Überwallungselements 3 mit dem Verankerungsabschnitt 7.

Die Ausnehmung 16 kann auch im Bereich ihres freien Endes eine konische Form aufweisen. Die Form der Ausnehmung 16 kann insbesondere eingepresst sein. Für weitere Details sei auf die vorhergehende Beschreibung verwiesen.

Durch die profilierte Ausbildung des Überwallungselements 3 ergeben sich zwei verschiedene Außendurchmesser des Überwallungselements 3. Im Folgenden wird ein Längsschnitt durch das Überwallungselement 3 beschrieben. Im Längsschnitt weist das Überwallungselement 3 ein Sägezahnprofil 32 auf. Der Außendurchmesser DA erstreckt sich von der Spitze eines ersten Sägezahns 35 auf der einen Seite des Überwallungselements 3 bis zur Spitze eines zweiten, bezüglich der Mittelachse BA symmetrisch liegenden Sägezahns 35, und hat insbesondere eine Länge von etwa 50 mm. Der Innendurchmesser DI hat insbesondere eine Länge von 42 mm, und erstreckt sich von einem unteren Quersteg 37 eines ersten Sägezahns 35 bis zu dem unteren Quersteg 37 des, zu dem ersten Sägezahns 35 bezüglich der Mittelachse BA symmetrisch liegenden, Sägezahns 35. Diese Angaben sind exemplarisch und nicht einschränkend zu verstehen. Andere Abmessungen sind möglich.

Ein Sägezahn 35 kann mehrere Teilabschnitte, insbesondere bis zu vier Teilabschnitte aufweisen. Er kann insbesondere oberen Quersteg 36, der insbesondere parallel zur Mittelachse BA verlaufen kann aufweisen. Er kann insbesondere eine abfallende erste Flanke 38, deren gedachte Verlängerung mit der Mittelachse BA einen Winkel α einschließt aufweisen. Er kann insbesondere einen unteren Quersteg 37, der insbesondere parallel zur Mittelachse BA ausgebildet sein kann aufweisen. Er kann eine aufsteigende zweite Flanke 39 aufweisen, deren gedachte Verlängerung die Mittelachse BA insbesondere rechtwinklig schneiden kann.

Der obere Quersteg 36 und der untere Quersteg 37 weisen dabei jeweilige Breiten bo beziehungsweise bu auf, die jeweils im Bereich von 1 mm bis zu 5 mm, insbesondere von 1 mm bis zu 3 mm insbesondere höchstens 1 mm liegen. Die Breiten können insbesondere gleich sein. Die Breiten können insbesondere unterschiedlich sein. Sie können insbesondere um mindestens 10%, insbesondere um mindestens 20% insbesondere um mindestens 30% und insbesondere um mindestens 50% voneinander abweichen. Die senkrechte Projektion der abfallenden Flanke 38 auf die Mittelachse BA kann eine Länge von etwa 8 mm aufweisen. Die Höhe eines Sägezahns hsk ist durch die Länge der aufsteigenden Flanke 39 gegeben. Sie kann eine Länge von etwa 4 mm aufweisen. Hieraus ergibt sich ein Maß des Winkels α von etwa 26 °. Im vorliegenden Beispiel, in dem das Profil aus sieben Sägezähnen 35 besteht, weist das komplette Überwallungselement 3 eine Länge luw auf, deren Größe etwa 70 mm beträgt. Mit einer variierenden Anzahl von Sägezähnen 35 ändert sich natürlich auch die Gesamtlänge des Überwallungselements 3.

Die Gewindestange 28 erstreckt sich von der Fläche des Überwallungs-elements 3, die dem ersten Ende 33 gegenüberliegt, entgegen der Einschraubrichtung 4a symmetrisch um die Mittelachse BA herum. Die Gewindestange 28 hat ein zweites Ende 6, dessen nach außen zeigende Normale zur Einschraubrichtung 4a antiparallel, das heißt entgegengesetzt orientiert ist. Die Gewindestange 28 weist einen Durchmesser DB auf, dessen Größe etwa 20 mm beträgt. Die Gewindestange 28 kann ein Gewinde aufweisen. Als Gewindestange 28 dient insbesondere der in den vorhergehenden Ausführungsbeispielen beschriebene Bolzen 2.

Das Gewinde kann insbesondere ein aus dem Stand der Technik bekanntes Gewinde sein, beispielsweise ein metrisches ISO-Gewinde, ein Trapezgewinde oder auch ein sonstiges Gewinde.

Der komplette Überwallungsabschnitt 3 mit dem Gewindebolzen 28 kann insbesondere einstückig ausgebildet sein, und durch Drehen, oder sonstige spanende Metallbearbeitungsverfahren aus einem Stück hergestellt werden. Es besteht auch die Möglichkeit, dass das Überwallungselement 3 und die Gewindestange 28 zwei separate Bauteile darstellen, die in einem Nach-bearbeitungsverfahren zusammengeführt werden.

Gewindestange 28 und Überwallungselement 3 können insbesondere derart ausgebildet sein, dass die Gewindestange 28 in das Überwallungselement 3 hineingeschraubt oder -gesteckt werden kann. Das Überwallungselement 3 und die Gewindestange 28 können derart ausgebildet sein, dass sie jederzeit reversibel zusammengeführt und voneinander getrennt werden können.

Das Überwallungselement 3 weist keine scharfen Kanten auf.

Alle Kanten des Sägezahnprofils 2, die bei der Fertigung eventuell entstehen, sind abgerundet. Sie können zumindest im Nachhinein mit einem Radius ausgerundet oder abgeschliffen werden.

Die Kanten können jeweils einen einheitlichen Krümmungsradius von mindestens 0,5 mm insbesondere mindestens 1 mm aufweisen.

Das Überwallungselement 3 kann im Bereich des zweiten Endes eine Bohrung mit einem Innengewinde aufweisen. Dieses ist in den Figuren gestrichelt dargestellt. Alternativ ist auch ein Vorsprung mit einem Außengewinde möglich. Das Innengewinde, respektive Außengewinde dient der Befestigung weiterer konstruktiver Bauelement.

Die Bohrung kann als Sacklochbohrung ausgebildet sein. Die Bohrung kann auch durchgehend sein. Sie kann sich insbesondere vom ersten bis zum zweiten Ende des Überwallungskörpers erstrecken. Für weitere Details sei auf die vorhergehende Beschreibung verwiesen.

In der Fig. 10 ist eine alternative Ausführungsform der Vorrichtung 1, insbesondere des Überwallungselements 3 dargestellt. Diese Variante unterscheidet sich insbesondere in den Details der Ausbildung der äußeren Oberfläche, insbesondere der Mantelfläche, des Überwallungselements 3. Für die die übrigen Details, insbesondere die Details des Bolzens 2 sowie weitere Details des Überwallungselements 3 sei auf die vorhergehende Beschreibung verwiesen.

Das Überwallungselement 3 gemäß dem in Fig. 10 dargestellten Ausführungsbeispiel weist im Querschnitt kein Sägezahnprofil 32, sondern ein Rundfräsungsprofil 46 auf.

Das Rundfräsungsprofil 46, welches auch als Fräsprofil bezeichnet wird, ist mittels eines Fräsverfahrens, insbesondere eines Rundfräsverfahrens herstellbar.

Alternativ hierzu kann das Überwallungselement 3 gemäß nicht separat dargestellter Ausführungsformen auch ein Prägeprofil, insbesondere ein Rändelprofil, oder ein Walzprofil aufweisen.

Das erfindungsgemäße Überwallungselement 3 gemäß der Fig. 10 weist eine Endfläche 33 mit einer Ausnehmung 16. Das Überwallungselement 3 gemäß der in Fig. 9 dargestellten Ausführungsvariante weist eine Gewindestange 28 mit einer Endfläche 34 auf. Die technische Ausgestaltung, sowie die Funktion dieser Elemente sind insbesondere identisch zu denen der entsprechenden Elemente gemäß Fig. 8, auf deren Beschreibung hier verwiesen wird.

Ähnlich zu dem in Fig. 8 dargestellten Ausführungsbeispiel weist das Rundfräsungsprofil 46 sieben vollumfängliche Rundfräsungen 47 auf. Auch in dieser Ausführungsvariante ist es denkbar, dass ein Überwallungselement 3 mit mehr oder weniger Rundfräsungen 47 Verwendung findet.

Zwischen den Rundfräsungen 47 sind jeweils obere Querstege 49 ausgebildet. Diese Querstege 49 haben jeweils eine Breite bst von 1 mm. Der Mittelteil des Überwallungselements 3 der erfindungsgemäßen Vorrichtung 1 gemäß Fig. 10, in diesem Ausführungsbeispiel umfassend die zweite bis sechste Rundfräsung 47, ist derart ausgestaltet, dass immer zwei Rundfräsungen 47 unmittelbar benachbart nebeneinanderliegen. Bei zwei benachbarten Rundfräsungen 47 ergibt sich somit ein oberer Quersteg 49 mit einer Gesamtlänge von 2 mm. Die oberen Querstege der ersten und der letzten, in diesem Fall der siebten, Rundfräsung 47 liegen an den Endflächen des Überwallungselements 3 an. Entsprechend haben diese Stege eine Breite von 1 mm. Andere Breiten der Stege sind möglich.

Zwischen dem ersten und dem zweiten Quersteg 49 befindet sich eine, in einem Längsschnitt durch das Überwallungselement, runde, insbesondere kreisbogenabschnittförmige Vertiefung 43. Diese runden Vertiefungen 43 verleihen dem Rundfräsungsprofil 46 eine abschnittsweise konkave Struktur.

Die Vertiefungen 48 weisen insbesondere eine Breite bv auf, die 8 mm betragen kann. Die Tiefe der runden Vertiefungen 48 tv kann insbesondere 4 mm betragen. Es ist möglich, die runden Vertiefungen 48 halbkreisförmig auszubilden. Es besteht jedoch prinzipiell auch die Möglichkeit, dass die Vertiefungen 48 eine andere Form aufweisen. Die Randlinie der Vertiefung 48 beispielsweise auch einer Parabel oder einer anderen geeigneten Kurve folgen.

Aufgrund der eben gewählten Maßzahlen ergibt sich auch für das Ausführungsbeispiel der gemäß Fig. 9 eine Gesamtlänge des Überwallungselements 3 von 70 mm. Auch hier ist prinzipiell denkbar, dass für das Überwallungselement 3 eine andere Gesamtlänge infrage kommt, die insbesondere abhängig ist von der Anzahl der verwendeten Rundfräsungen 46. Durch die gewählte Tiefe der runden Vertiefungen 48 von 4a mm, ergibt sich auch für das Überwallungselement 3 der gemäß Fig. 10 ein Außendurchmesser DA mit einer Länge von 50 mm und ein Innendurchmesser DI von etwa 42 mm.

Auch bei dem hier diskutierten Ausführungsbeispiel sind sämtliche Kanten abgerundet. Alle Kanten werden mit einem Radius ausgerundet oder abgeschliffen.

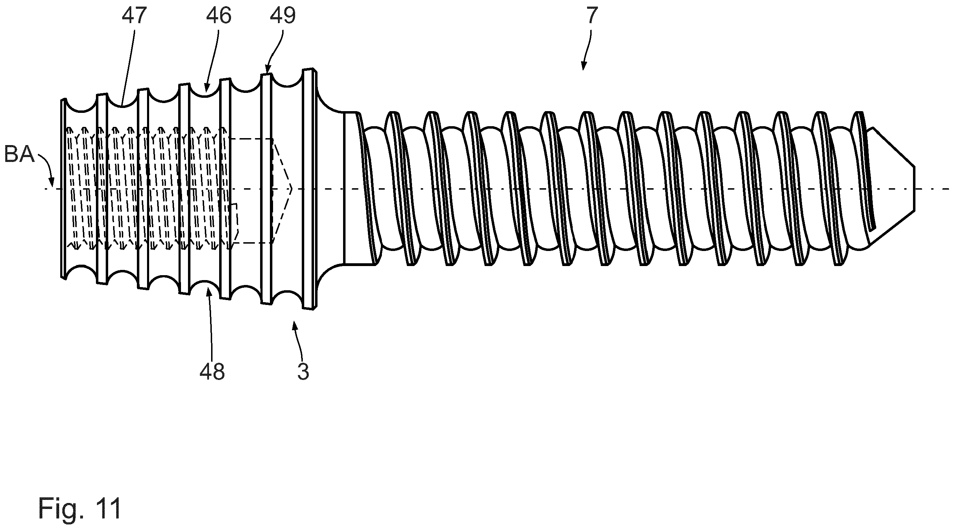

In Fig. 11 ist ein Variante zur Ausführungsform des Überwallungselements 3 gemäß Fig. 10 dargestellt. Bei dieser Ausführungsform weist das Überwallungselement eine konisch nach außen zulaufende Form, insbesondere eine konisch nach außen zulaufende Einhüllende, auf. Für die übrigen Details sei auf die Beschreibung der vorhergehenden Ausführungsbeispiele verwiesen.

Das Überwallungselement 3 kann insbesondere im Bereich des zweiten (äußeren) Endes einen Durchmesser aufweisen, welcher höchstens 90%, insbesondere höchstens 80%, insbesondere höchstens 70%, seines Durchmessers im Bereich des ersten Endes beträgt.

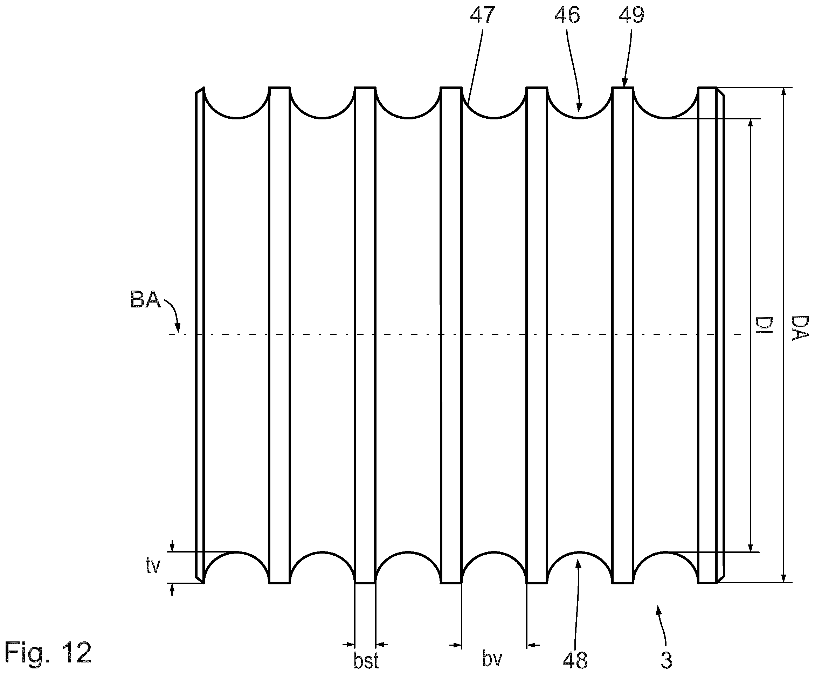

In Fig. 12 ist exemplarisch ein Längsschnitt durch das Überwallungselement 3 ohne den Bolzen 2, insbesondere ohne den Verankerungsabschnitt dargestellt. Das Überwallungselement 3 gemäß Fig. 12 entspricht dem gemäß Fig. 10, auf dessen Beschreibung hiermit verwiesen wird.

## Patentansprüche

1. Überwallungselement (3) für eine Vorrichtung (1) zum Verankern von Plattformen, Seilen oder anderen konstruktiven Bauelementen in Bäumen, aufweisend
1.1. einen sich parallel zu einer Längsachse erstreckenden Überwallungskörper mit einer zumindest abschnittsweise profilierten Oberfläche,
1.2. **dadurch gekennzeichnet, dass** sämtliche Kanten des Überwallungskörpers abgerundet ausgebildet sind, wobei der Überwallungskörper an einem Ende umfangsseitig scharfkantig ausgebildet sein kann.

2. Überwallungselement (3) gemäß Anspruch 1, **dadurch gekennzeichnet, dass** der Überwallungskörper im Querschnitt zumindest abschnittsweise ein Sägezahnprofil (32) und/oder ein Fräsungsprofil (40) und/oder ein Prägeprofil und/oder ein Walzprofil aufweist.

3. Überwallungselement (3) gemäß einem der vorhergehenden Ansprüche, **dadurch gekennzeichnet, dass** das Oberflächenprofil des Überwallungskörpers mindestens drei Verengungen aufweist.

4. Überwallungselement (3) gemäß einem der vorhergehenden Ansprüche, **dadurch gekennzeichnet, dass** der Überwallungskörper eine Mehrzahl konisch zulaufender Bereiche aufweist.

5. Überwallungselement (3) gemäß einem der vorhergehenden Ansprüche, **dadurch gekennzeichnet, dass** der Überwallungskörper zumindest abschnittsweise eine zylinderförmige oder konische Einhüllende aufweist.

6. Überwallungselement (3) gemäß einem der vorhergehenden Ansprüche, **dadurch gekennzeichnet, dass** das Oberflächenprofil asymmetrisch ausgebildet ist.

7. Überwallungselement (3) gemäß einem der vorhergehenden Ansprüche, **dadurch gekennzeichnet, dass** der Überwallungskörper an einem ersten Ende eine konisch ausgebildete Ausnehmung (16) aufweist.

8. Überwallungselement (3) gemäß einem der vorhergehenden Ansprüche, **dadurch gekennzeichnet, dass** der Überwallungskörper ein sich von einem zweiten Ende axial erstreckendes Innengewinde (15) aufweist

9. Überwallungselement (3) gemäß einem der Ansprüche 1 bis 6 oder 8, **dadurch gekennzeichnet, dass es** einteilig mit einem Bolzen (2) ausgebildet ist.

10. Vorrichtung (1) zum Verankern von Plattformen, Seilen oder anderen konstruktiven Bauelementen in Bäumen aufweisend
10.1. einen Bolzen (2) mit
10.1.1. einer Bolzenachse (BA) und
10.1.2. einem sich spiralförmig um die Bolzenachse (BA) erstreckenden Gewinde (11) und
10.2. ein Überwallungselement (3) gemäß einem der vorhergehenden Ansprüche.

11. Vorrichtung (1) gemäß Anspruch 10, **dadurch gekennzeichnet, dass** der Bolzen (2) zumindest abschnittsweise im Bereich zwischen zwei benachbarten Gewindeflanken eine durch ein Mittel zum Komprimieren profilierte Oberfläche aufweist, welche eine in Richtung parallel zur Bolzenachse (BA) variierende Kompressionshöhe (Kh) aufweist.

12. Verfahren zum Verankern einer Plattform, Seilen oder anderen konstruktiven Bauelementen in einem Baum umfassend die folgenden Schritte:
12.1. Bereitstellen einer Vorrichtung (1) gemäß Anspruch 10 oder 11,
12.2. Einbringen einer Bohrung (19) in einen Baum,
12.3. Einschrauben des Verankerungsabschnitts (7) des Bolzens (2) in die Bohrung (19),
12.4. wobei das Überwallungselement (3) an einer definierten Position außerhalb des Kambiums zu liegen kommt.

13. Verfahren gemäß Anspruch 12, **dadurch gekennzeichnet, dass** das Überwallungselement (3) in Abhängigkeit von der Baumart und/oder dem zu erwartenden jährlichen Dickenwachstum des Baums ausgewählt wird.

14. Verfahren gemäß Anspruch 13, **dadurch gekennzeichnet, dass** zur Auswahl des Überwallungselements (3) zunächst eine Kernbohrung im Baum oder einem vergleichbaren Baum vorgenommen wird, aus welcher ein mittlerer Abstand von Jahresringen ermittelbar ist.

15. Verfahren zur Herstellung eines Überwallungselements (3) gemäß einem der Ansprüche 1 bis 9, umfassend die folgenden Schritte:
15.1. Vorgabe eines mittleren jährlichen Dickenwachstums,
15.2. Bereitstellen eines unprofilierten Überwallungskörpers
15.3. Einbringen eines Oberflächenprofils in den Überwallungskörper,
15.3.1. wobei das Oberflächenprofil eine Periodizität hat, welche um höchstens 50% vom vorgegebenen mittleren jährlichen Dickenwachstum abweicht und/oder
15.3.2. wobei zum Einbringen des Oberflächenprofils ein Fräsverfahren, ein Walzverfahren oder ein Prägeverfahren verwendet wird.

## Claims

1. Overgrowth element (3) for a device (1) for anchoring platforms, ropes or other structural components in trees, having
1.1. an overgrowth body extending parallel to a longitudinal axis having an at least partially profiled surface,
1.2. **characterised in that** all edges of the overgrowth body are rounded,
wherein the overgrowth body can be designed with a sharp edge at one end around its circumference.

2. Overgrowth element (3) according to Claim 1, **characterised in that** the overgrowth body, in cross-section, has a sawtooth profile (32) and/or a milling profile (40) and/or an embossing profile and/or a rolling profile at least in sections.

3. Overgrowth element (3) according to one of the preceding claims, **characterised in that** the surface profile of the overgrowth body has at least three constrictions.

4. Overgrowth element (3) according to one of the preceding claims, **characterised in that** the overgrowth body has a plurality of tapered regions.

5. Overgrowth element (3) according to one of the preceding claims, **characterised in that** the overgrowth body has a cylindrical or conical envelope at least in sections.

6. Overgrowth element (3) according to one of the preceding claims, **characterised in that** the surface profile is asymmetrical.

7. Overgrowth element (3) according to one of the preceding claims, **characterised in that** the overgrowth body has a conical recess (16) at a first end.

8. Overgrowth element (3) according to one of the preceding claims, **characterised in that** the overgrowth body has an internal thread (15) extending axially from a second end.

9. Overgrowth element (3) according to one of Claims 1 to 6 or 8, **characterised in that** it is formed integrally with a bolt (2).

10. Device (1) for anchoring platforms, ropes or other structural components in trees having
10.1. a bolt (2) with
10.1.1. a bolt axis (BA) and
10.1.2. a thread (11) extending helically around the bolt axis (BA) and
10.2. an overgrowth element (3) according to one of the preceding claims.

11. Device (1) according to Claim 10, **characterised in that** the bolt (2) has, at least in sections in the region between two adjacent thread flanks, a surface profiled by a means for compression, which has a compression height (Kh) that varies in a direction parallel to the bolt axis (BA).

12. Method for anchoring a platform, ropes or other structural components in a tree comprising the following steps:
12.1. providing a device (1) according to Claim 10 or 11,
12.2. drilling a hole (19) into a tree,
12.3. screwing the anchoring section (7) of the bolt (2) into the hole (19),
12.4. wherein the overgrowth element (3) comes to rest at a defined position outside of the cambium.

13. Method according to Claim 12, **characterised in that** the overgrowth element (3) is selected depending on the type of tree and/or the expected annual thickness growth of the tree.

14. Method according to Claim 13, **characterised in that,** in order to select the overgrowth element (3), a core sample is first taken from the tree or a comparable tree, from which an average distance between annual rings can be determined.

15. Method for producing an overgrowth element (3) according to one of Claims 1 to 9, comprising the following steps:
15.1. specifying an average annual thickness growth,
15.2. providing a non-profiled overgrowth body
15.3. introducing a surface profile into the overgrowth body,
15.3.1. wherein the surface profile has a periodicity which deviates by no more than 50% from the specified average annual thickness growth and/or
15.3.2. wherein a milling method, a rolling method or an embossing method is used to introduce the surface profile.

## Revendications

1. Élément de formation de bourrelet de recouvrement (3) pour un dispositif (1) destiné à l'ancrage de plateformes, de cordes ou d'autres éléments structuraux dans des arbres, présentant
1.1. un corps de formation de bourrelet de recouvrement s'étendant parallèlement à un axe longitudinal et doté d'une surface profilée au moins par sections,
1.2. **caractérisé en ce que** tous les bords du corps de formation de bourrelet de recouvrement sont conçus arrondis, le corps de formation de bourrelet de recouvrement pouvant être conçu à bord vif sur la périphérie sur une extrémité.

2. Élément de formation de bourrelet de recouvrement (3) selon la revendication 1, **caractérisé en ce que** le corps de formation de bourrelet de recouvrement présente, en coupe transversale, au moins par sections, un profil en dents de scie (32) et/ou un profil fraisé (40) et/ou un profil estampé et/ou un profil laminé.

3. Élément de formation de bourrelet de recouvrement (3) selon l'une des revendications précédentes, **caractérisé en ce que** le profil de surface du corps de formation de bourrelet de recouvrement présente au moins trois rétrécissements.

4. Élément de formation de bourrelet de recouvrement (3) selon l'une des revendications précédentes, **caractérisé en ce que le** corps de formation de bourrelet de recouvrement présente une pluralité de zones se resserrant en une forme conique.

5. Élément de formation de bourrelet de recouvrement (3) selon l'une des revendications précédentes, **caractérisé en ce que** le corps de formation de bourrelet de recouvrement présente, au moins par sections, une courbe enveloppe cylindrique ou conique.

6. Élément de formation de bourrelet de recouvrement (3) selon l'une des revendications précédentes, **caractérisé en ce que** le profil de surface est asymétrique.

7. Élément de formation de bourrelet de recouvrement (3) selon l'une des revendications précédentes, **caractérisé en ce que** le corps de formation de bourrelet de recouvrement présente, sur une première extrémité, un évidement (16) conique.

8. Élément de formation de bourrelet de recouvrement (3) selon l'une des revendications précédentes, **caractérisé en ce que** le corps de formation de bourrelet de recouvrement présente un filetage intérieur (15) s'étendant axialement depuis une seconde extrémité.

9. Élément de formation de bourrelet de recouvrement (3) selon l'une des revendications 1 à 6 ou 8, **caractérisé en ce qu'**il est conçu d'un seul tenant avec un boulon (2).

10. Dispositif (1) destiné à l'ancrage de plateformes, de cordes ou d'autres éléments structuraux dans des arbres, présentant
10.1. un boulon (2) comprenant
10.1.1. un axe de boulon (BA) et
10.1.2. un filetage (11) s'étendant en forme de spirale autour de l'axe de boulon (BA) et
10.2. un élément de formation de bourrelet de recouvrement (3) selon l'une des revendications précédentes.

11. Dispositif (1) selon la revendication 10, **caractérisé en ce que** le boulon (2) présente, au moins par sections, dans la zone située entre deux flancs de filet adjacents, une surface profilée par un moyen de compression, qui présente une hauteur de compression (Kh) variable dans la direction parallèle à l'axe de boulon (BA).

12. Procédé d'ancrage d'une plateforme, de cordes ou d'autres éléments structuraux dans un arbre, comprenant les étapes suivantes :
12.1. mise à disposition d'un dispositif (1) selon la revendication 10 ou 11,
12.2. réalisation d'un trou (19) dans un arbre,
12.3. vissage de la section d'ancrage (7) du boulon (2) dans le trou (19),
12.4. dans lequel l'élément de formation de bourrelet de recouvrement (3) vient se placer à un emplacement défini en dehors du cambium.

13. Procédé selon la revendication 12, **caractérisé en ce que** l'élément de formation de bourrelet de recouvrement (3) est sélectionné en fonction du type d'arbre et/ou de la croissance en épaisseur annuelle de l'arbre à prévoir.

14. Procédé selon la revendication 13, **caractérisé en ce que,** pour la sélection de l'élément de formation de bourrelet de recouvrement (3), un carottage est d'abord effectué dans l'arbre ou dans un arbre comparable, à partir duquel une distance moyenne des cernes peut être déterminée.

15. Procédé de fabrication d'un élément de formation de bourrelet de recouvrement (3) selon l'une des revendications 1 à 9, comprenant les étapes suivantes :
15.1. spécification d'une croissance en épaisseur annuelle moyenne,
15.2. mise à disposition d'un corps de formation de bourrelet de recouvrement non profilé
15.3. réalisation d'un profil de surface dans le corps de formation de bourrelet de recouvrement,
15.3.1. dans lequel le profil de surface présente une périodicité qui diffère de maximum 50 % de la croissance en épaisseur annuelle moyenne spécifiée et/ou
15.3.2. dans lequel un procédé de fraisage, un procédé de laminage ou un procédé d'estampage est utilisé pour la réalisation du profil de surface.
